(19) Europäisches Patentamt
European Patent Office
Office européen des brevets

(11) EP 4 468 612 A1

(12) **EUROPEAN PATENT APPLICATION**
published in accordance with Art. 153(4) EPC

(43) Date of publication:
27.11.2024 Bulletin 2024/48

(21) Application number: 23743532.6

(22) Date of filing: 20.01.2023

(51) International Patent Classification (IPC):
H04B 1/3827 (2015.01)     H04W 52/36 (2009.01)
H04W 52/38 (2009.01)     H04W 52/28 (2009.01)
H04W 52/22 (2009.01)     H04W 52/14 (2009.01)
H04W 88/06 (2009.01)

(52) Cooperative Patent Classification (CPC):
H04B 1/3827; H04W 52/14; H04W 52/22;
H04W 52/28; H04W 52/36; H04W 52/38;
H04W 88/06

(86) International application number:
PCT/KR2023/001026

(87) International publication number:
WO 2023/140689 (27.07.2023 Gazette 2023/30)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.01.2022 KR 20220010269
17.03.2022 KR 20220033157

(71) Applicant: **Samsung Electronics Co., Ltd**
**Suwon-si, Gyeonggi-do 16677 (KR)**

(72) Inventors:
• **CHA, Jaemoon**
**Suwon-si Gyeonggi-do 16677 (KR)**
• **PARK, Jaewoo**
**Suwon-si Gyeonggi-do 16677 (KR)**
• **LEE, Yeonjoo**
**Suwon-si Gyeonggi-do 16677 (KR)**

(74) Representative: **Arnold & Siedsma**
**Bezuidenhoutseweg 57**
**2594 AC The Hague (NL)**

(54) **ELECTRONIC DEVICE FOR PERFORMING BACK-OFF ON BASIS OF SAR AND OPERATING METHOD THEREOF**

(57)   According to various embodiments, an electronic device comprises: at least one housing; a plurality of antennas arranged on the at least one housing; at least one RF circuit; and at least one processor, wherein the at least one processor may be configured to: determine to transmit an RF signal through a first RF path corresponding to a first antenna among the plurality of antennas; identify the state of the at least one housing; identify a maximum transmission power limit corresponding to the first RF path, on the basis of whether a cumulative SAR for the first RF path satisfies a maximum transmission power limit backoff condition associated with an antenna group determined according to the state of the at least one housing; and control the at least one RF circuit to transmit the RF signal on the basis of transmission power set on the basis of the maximum transmission power limit. Various other embodiments are possible.

FIG. 7A

START

DETERMINE TO TRANSMIT RF SIGNAL THROUGH FIRST RF PATH — 701

IDENTIFY STATE OF HOUSING — 703

IDENTIFY MAXIMUM TRANSMISSION POWER LIMIT CORRESPONDING TO FIRST RF PATH BASED ON WHETHER ACCUMULATED SAR FOR FIRST RF PATH MEETS MAXIMUM TRANSMISSION POWER LIMIT BACKOFF CONDITION ASSOCIATED WITH ANTENNA GROUP DETERMINED ACCORDING TO IDENTIFIED STATE OF HOUSING — 705

CONTROL AT LEAST ONE RF CIRCUIT TO TRANSMIT RF SIGNAL BASED ON TRANSMISSION POWER SET BASED ON MAXIMUM TRANSMISSION POWER LIMIT — 707

END

EP 4 468 612 A1

**Description**

[Technical Field]

Various embodiments of the disclosure relate to an electronic device that performs backoff of maximum transmission power limit (MTPL) or transmission power based on specific absorption rate (SAR) and an operation method thereof.

[Background Art]

A user equipment (UE) may transmit electromagnetic waves to transmit/receive data to/from a base station. Electromagnetic waves radiated from the UE may harm the human body, and various domestic or foreign organizations attempt to restrict the harmful electromagnetic waves. For example, the specific absorption rate (SAR) is a value indicating how much electromagnetic radiation from a mobile communication terminal is absorbed by the human body. SAR uses the unit of KW/g (or mW/g), which may mean the amount of power (KW, W or mW) absorbed per 1g of the human body. As the issue of harmfulness of electromagnetic waves attracts attention, SAR limit standards for mobile communication terminals have been established.

The UE may back off the transmission power (or maximum transmission power limit (MTPL)), e.g., if the SAR predicted by the transmission power is predicted to exceed a threshold. For example, upon identifying that a specific event (e.g., a grip, hot-spot, or proximity) occurs, the UE may transmit a communication signal in the backoff power corresponding to the event or transmit a communication signal in the transmission power set based on the maximum transmission power limit.

Further, there is also used technology of backing off the transmission power (or maximum transmission power limit) based on the total SAR value accumulated for a predetermined time (or the average of the SARs generated for a predetermined time). The SAR that instantaneously affects the human body and/or the SAR that affects the human body on average should also be considered. Therefore, the transmission power (or maximum transmission power limit) when the total SAR value accumulated (or the average of the SARs generated for a predetermined time) meets a designated condition may be backed off.

[Detailed Description of the Invention]

[Technical Problem]

The UE may transmit two RF signals using the two RF paths, respectively, which may be referred to as 2 TX. For example, the UE may transmit the two RF signals based on multi radio access technology (RAT) - dual connectivity (MR-DC) at least simultaneously through the two RF paths, respectively. For example, the UE may transmit the two RF signals based on protocol stacks of a dual subscriber identification module (SIM) (DSDA) at least simultaneously through the two RF paths, respectively. In the case of 2 TX, when RF signals are transmitted through the physically adjacent antennas, because the sum of SARs by the respective RF signals is calculated as the total SAR, the accumulated SAR may increase relatively rapidly. In this case, due to the relatively rapid increase in the accumulated SAR, a backoff of one transmission power or maximum transmission power limit of 2TX may be required. When the transmit power or the maximum transmission power limit is backed off, the possibility that the communication connection is released may increase. Meanwhile, when RF signals are transmitted through antennas that are physically relatively far apart, whether to perform backoff may be determined based on the SARs corresponding to the respective RF signals, rather than the sum of the SARs. In recent foldable electronic devices or rollable electronic devices, the housing is transformable, and the distance between antennas is variable.

An electronic device and an operation method thereof may determine whether to perform backoff based on the distance between the antennas for transmitting RF signals.

[Technical Solution]

According to various embodiments, an electronic device may comprise at least one housing, a plurality of antennas disposed on the at least one housing, at least one RF circuit, and at least one processor. The at least one processor may be configured to determine to transmit an RF signal through a first RF path corresponding to a first antenna among the plurality of antennas, identify a state of the at least one housing, identify a maximum transmission power limit corresponding to the first RF path based on whether an accumulated SAR for the first RF path meets a maximum transmission power limit backoff condition associated with an antenna group determined according to the state of the at least one housing, and control the at least one RF circuit to transmit the RF signal based on transmission power set based on the maximum transmission power limit.

According to various embodiments, an electronic device may comprise at least one housing, a plurality of antennas disposed on the at least one housing, at least one RF circuit, and at least one processor. The at least one processor may be configured to determine to transmit RF signals through a first RF path corresponding to a first antenna among the plurality of antennas and a second RF path corresponding to a second antenna among the plurality of antennas, identify whether a distance between the first antenna and the second antenna is less than a threshold distance, the distance between the first antenna and the second antenna varying depending on a state of the at least one housing, based on the distance between the first antenna and the second antenna being less than the threshold distance identify whether to reduce at least one of a first maximum transmission power limit corresponding to the first RF path or a maximum transmission power limit corresponding to the second RF path, based on whether a sum of a first accumulated SAR corresponding to the first RF path and a second accumulated SAR corresponding to the second RF path meets a maximum transmission power limit backoff condition, and control the at least one RF circuit to transmit a first RF signal based on a first transmission power set based on the first maximum transmission power limit and to transmit a second RF signal based on a second transmission power set based on the second maximum transmission power limit.

According to various embodiments, a method for operating an electronic device including at least one housing, a plurality of antennas disposed on the at least one housing, and at least one RF circuit may comprise determining to transmit an RF signal through a first RF path corresponding to a first antenna among the plurality of antennas, identifying a state of the at least one housing, identifying a maximum transmission power limit corresponding to the first RF path based on whether an accumulated SAR for the first RF path meets a maximum transmission power limit backoff condition associated with an antenna group determined according to the state of the at least one housing, and controlling the at least one RF circuit to transmit the RF signal based on transmission power set based on the maximum transmission power limit.

According to various embodiments, a method for operating an electronic device including at least one housing, a plurality of antennas disposed on the at least one housing, and at least one RF circuit may comprise determining to transmit RF signals through a first RF path corresponding to a first antenna among the plurality of antennas and a second RF path corresponding to a second antenna among the plurality of antennas, identifying whether a distance between the first antenna and the second antenna is less than a threshold distance, the distance between the first antenna and the second antenna varying depending on a state of the at least one housing, based on the distance between the first antenna and the second antenna being less than the threshold distance, identifying whether to reduce at least one of a first maximum transmission power limit corresponding to the first RF path or a maximum transmission power limit corresponding to the second RF path, based on whether a sum of a first accumulated SAR corresponding to the first RF path and a second accumulated SAR corresponding to the second RF path meets a maximum transmission power limit backoff condition, and controlling the at least one RF circuit to transmit a first RF signal based on a first transmission power set based on the first maximum transmission power limit and to transmit a second RF signal based on a second transmission power set based on the second maximum transmission power limit.

[Advantageous Effects]

According to various embodiments, there may be provided an electronic device and an operation method thereof which may determine whether to perform backoff based on the distance between the antennas for transmitting RF signals. Accordingly, when RF signals are transmitted through antennas having a relatively large distance according to the transformation of the housing of the electronic device, whether to perform backoff may be determined based on each of SARs, rather than the sum of the SARs. Accordingly, backoff of transmission power (or maximum transmission power limit) may be delayed or prevented at any RF path.

[Brief Description of Drawings]

FIG. 1 is a view illustrating an electronic device in a network environment according to various embodiments;
FIG. 2A is a block diagram illustrating an electronic device for supporting legacy network communication and 5G network communication according to various embodiments;
FIG. 2B is a block diagram illustrating an electronic device for supporting legacy network communication and 5G network communication according to various embodiments;
FIG. 3A is a flowchart illustrating an operation method of an electronic device according to various embodiments;
FIG. 3B is a view illustrating transmission power and SAR over time according to various embodiments;
FIGS. 4A, 4B, and 4C illustrate graphs of transmission power per time according to various embodiments;
FIGS. 4D to 4E illustrate tables of transmission power per time according to various embodiments;
FIG. 5 is a block diagram illustrating a plurality of transmission paths of an electronic device according to various embodiments;

FIG. 6A is a view illustrating a change in the state of a housing of an electronic device according to various embodiments;

FIGS. 6B and 6C are views illustrating a distance between antennas according to various embodiments;

FIG. 7A is a flowchart illustrating an operation method of an electronic device according to various embodiments;

FIG. 7B illustrates tables of transmission power per time according to various embodiments;

FIG. 8 is a flowchart illustrating a method for operating an electronic device according to various embodiments;

FIG. 9 is a flowchart illustrating an operation method of an electronic device according to various embodiments;

FIG. 10 is a view illustrating an SAR event according to various embodiments;

FIG. 11A is a flowchart illustrating an operation method of an electronic device according to various embodiments;

FIG. 11B is a flowchart illustrating an operation method of an electronic device according to various embodiments;

FIG. 12 is a view illustrating backoff of a maximum transmission power limit and restoration of the maximum transmission power limit according to various embodiments;

FIG. 13A is a flowchart illustrating an operation method of an electronic device according to various embodiments;

FIG. 13B is a flowchart illustrating an operation method of an electronic device according to various embodiments;

FIG. 14 is a flowchart illustrating an operation method of an electronic device according to various embodiments;

FIG. 15 is a view illustrating an antenna group in a half-folded state according to various embodiments;

FIG. 16 is a view illustrating a distance between antennas of an electronic device according to various embodiments;

FIG. 17 is a flowchart illustrating a method for operating an electronic device according to various embodiments;

FIGS. 18A and 18B are a plan view and a side view illustrating an electronic device according to various embodiments;

FIGS. 19A and 19B are a plan view and a side view illustrating an electronic device according to various embodiments;

FIG. 20A is a view illustrating an electronic device foldable multiple times according to various embodiments;

FIG. 20B is a side view illustrating an electronic device foldable multiple times according to various embodiments;

FIG. 20C illustrates a state in which an electronic device foldable multiple times is folded multiple times according to various embodiments; and

FIG. 21 is a view illustrating an electronic device according to various embodiments.

[Mode for Carrying out the Invention]

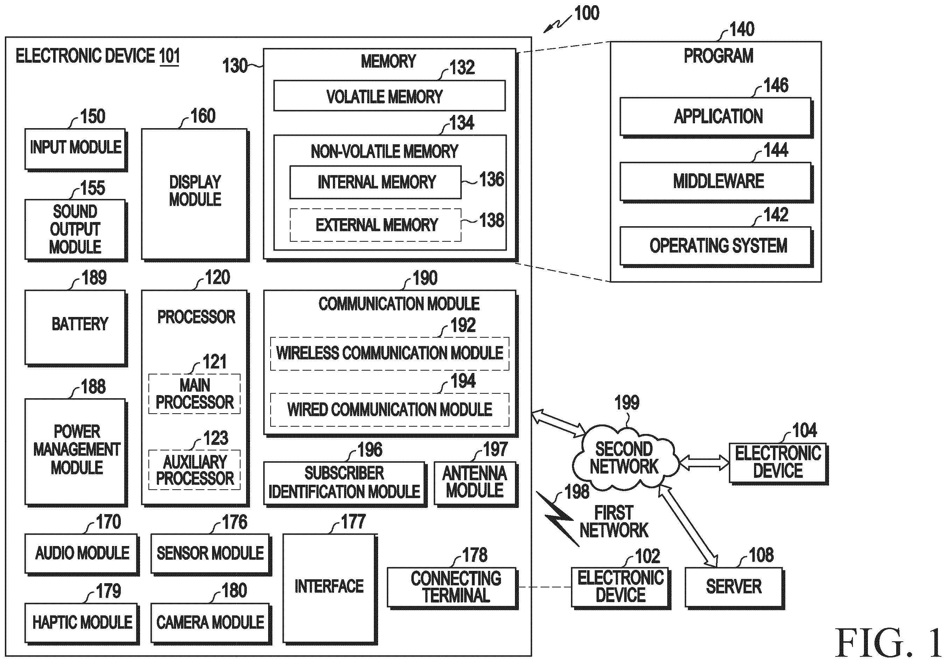

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

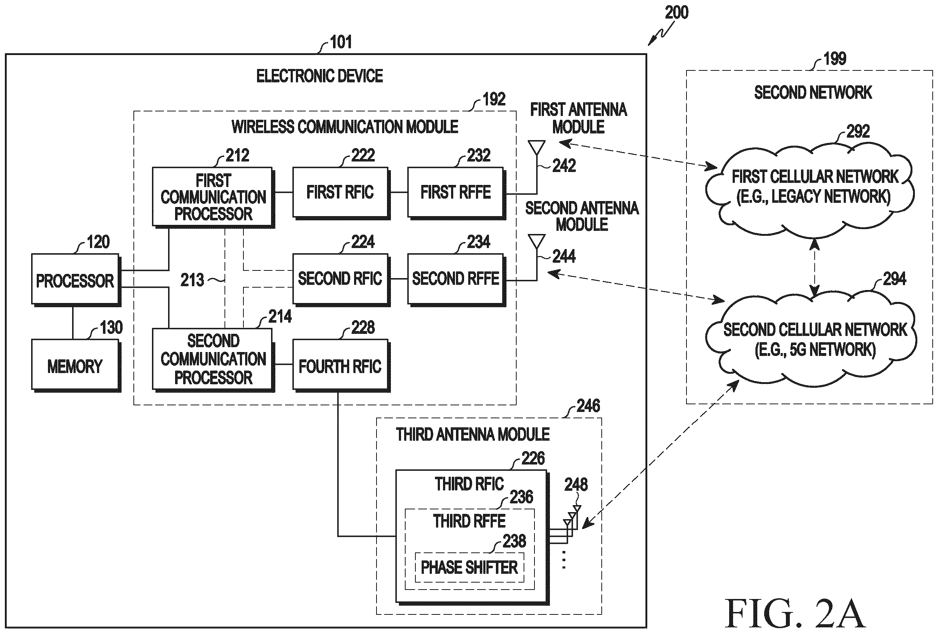

FIG. 2A is a block diagram 200 illustrating an electronic device 101 for supporting legacy network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and memory 130. The second network 199 may include a first cellular network 292 and a second cellular network 294. According to an embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to various embodiments, the first cellular network may be a legacy network that includes second generation (2G), third generation (3G), fourth generation (4G), or long-term evolution (LTE) networks. The second CP 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first CP 212 or the second CP 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

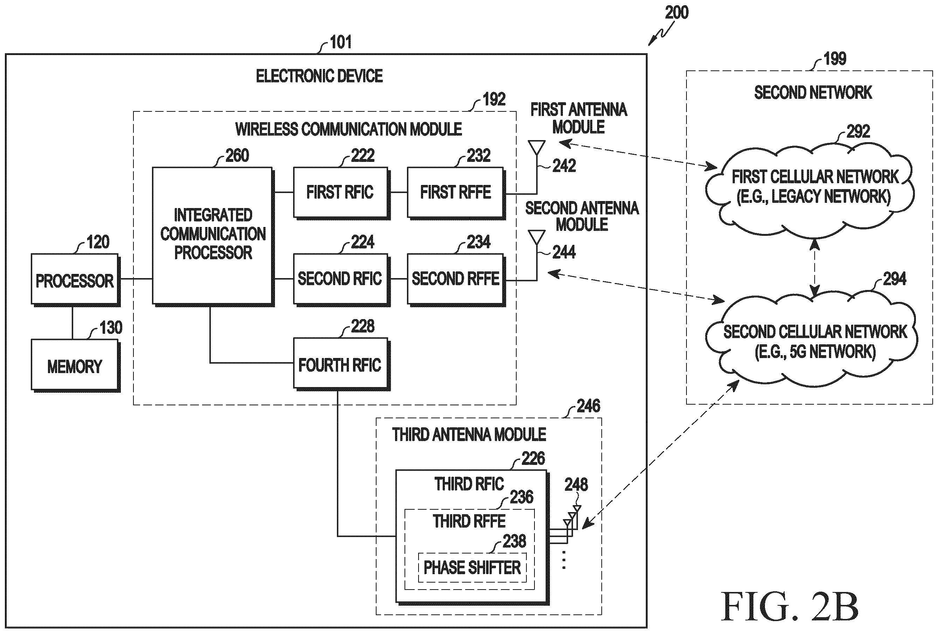

According to an embodiment, the first communication processor 212 and the second communication processor 214 may be implemented in a single chip or a single package. According to an embodiment, the first CP 212 or the second CP 214, along with the processor 120, an assistance processor 123, or communication module 190, may be formed in a single chip or single package. For example, as shown in FIG. 2B, a communication processor 440 may support all of the functions for communication with the first cellular network 292 and the second cellular network 294.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second CP 214 into a 5G Above6 band (e.g., from about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11 GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to various embodiments, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main painted circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 230 and be accessed by other components (e.g., the processor 120, the first communication processor 212, or the second communication processor 214).

Meanwhile, a communication processor (e.g., at least one of the first communication processor 212, the second communication processor 214, or the integrated communication processor 260) may be implemented as an integrated circuit and, in this case, may also include at least one storage circuit for storing at least one instruction to trigger to perform an operation according to various embodiments and at least one processing circuit to execute at least one instruction.

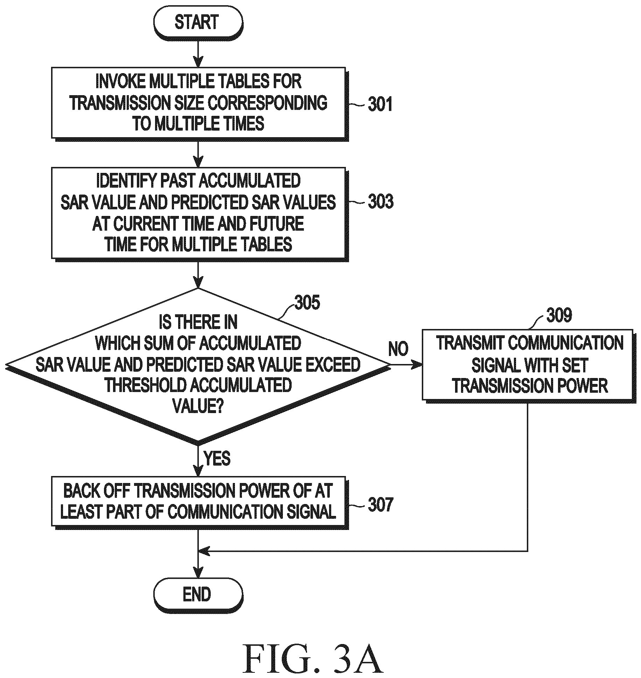

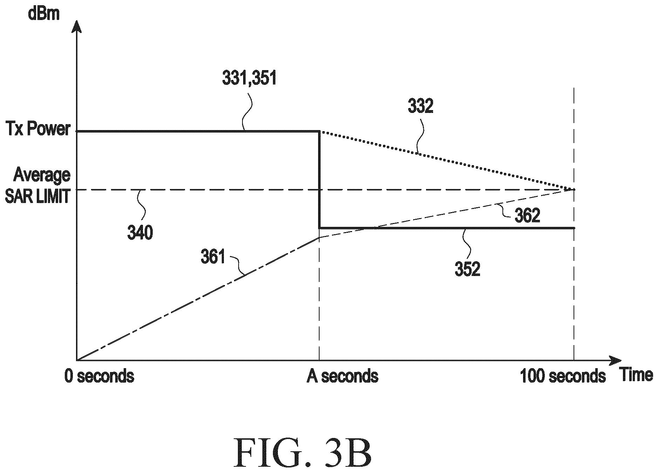

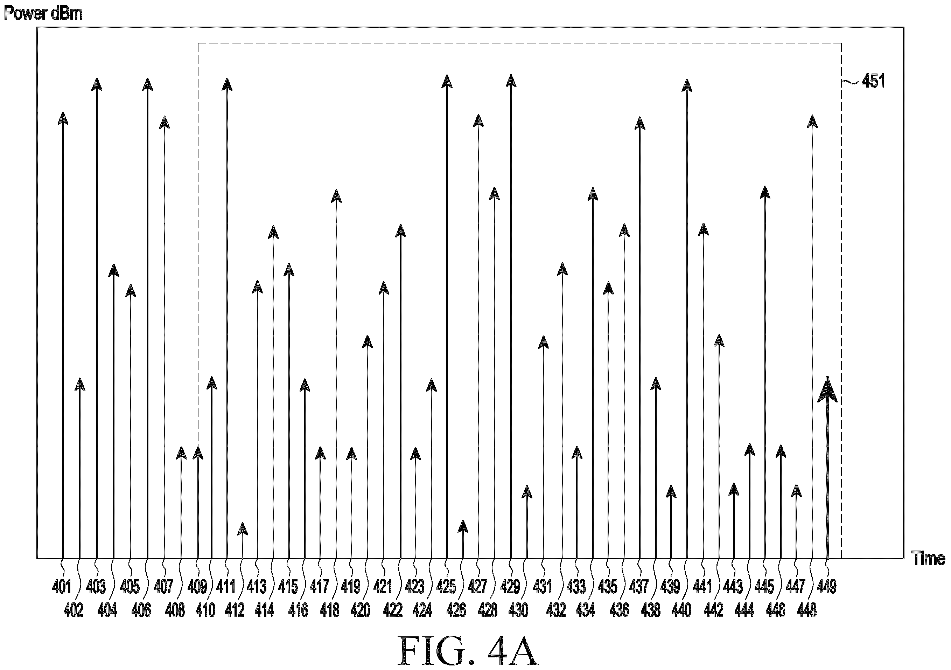

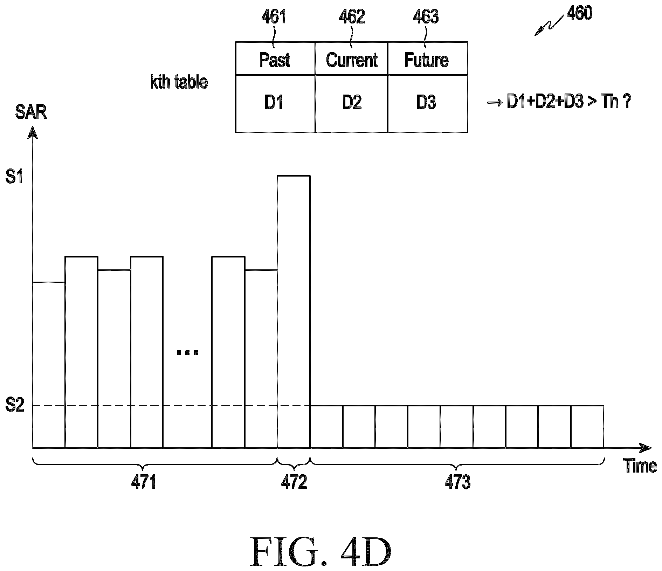

FIG. 3A is a flowchart illustrating an operation method of an electronic device according to various embodiments. The embodiment of FIG. 3A is described with reference to FIGS. 3B and 4A to 4E. FIG. 3B is a view illustrating transmission power and SAR over time according to various embodiments. FIGS. 4A to 4C illustrate graphs of transmission power per time according to various embodiments. FIGS. 4D to 4E illustrate tables of transmission power per time according to various embodiments.

According to various embodiments, an electronic device 101 (e.g., at least one of the processor 120, the first communication processor 212, the second communication processor 214, or the integrated communication processor 260) may invoke a plurality of tables for the transmission power corresponding to a plurality of times in operation 301. Before describing the embodiment associated with FIG. 3A, terms as shown in Table 1 are defined.

[Table 1]

| |
|---|
| a. Normal MAX Power: the maximum transmission power when SAR margin remains |
| b. Normal Max SAR: the magnitude of SAR generated in normal MAX power |
| c. Backoff MAX Power: the maximum transmission power when backoff is performed due to shortage of SAR margin |
| d. Backoff Max SAR: the magnitude of SAR generated when operating in backoff max power |
| e. Measurement Time(T): period for calculating the accumulated SAR or SAR average |
| f. Measurement Period(P): period (or time interval) for calculating SAR |
| g. Number of tables for calculating SAR: T/P - 1 |
| h. Average SAR LIMIT: the maximum value of the average SAR that should not be exceeded during T |
| i. Average Time(A_Time): the time measured with SARs accumulated |
| j. Accumulated SAR : the sum of SARs accumulated for average time. |
| k. Max accumulated SAR : Average SAR LIMIT X measurement Time |
| l. Average SAR : the magnitude of average SAR used for average Time |
| m. Tx Room : Max accumulated SAR - accumulated SAR, SAR remaining after use |
| n. Remain Time(R_Time) : total measurement time - time (A_Time) during which SAR is measured up to now |

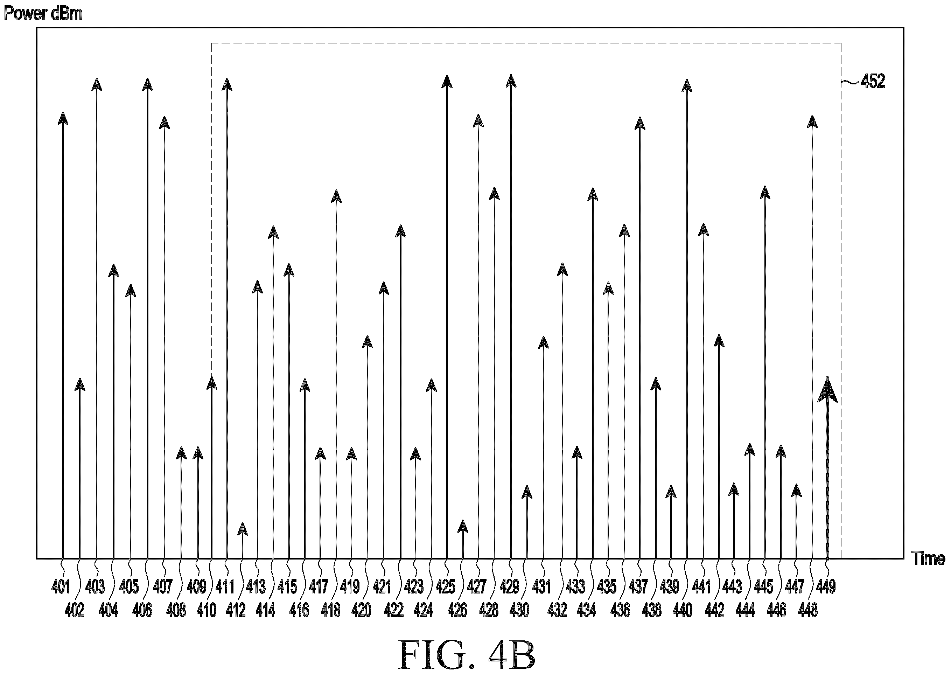

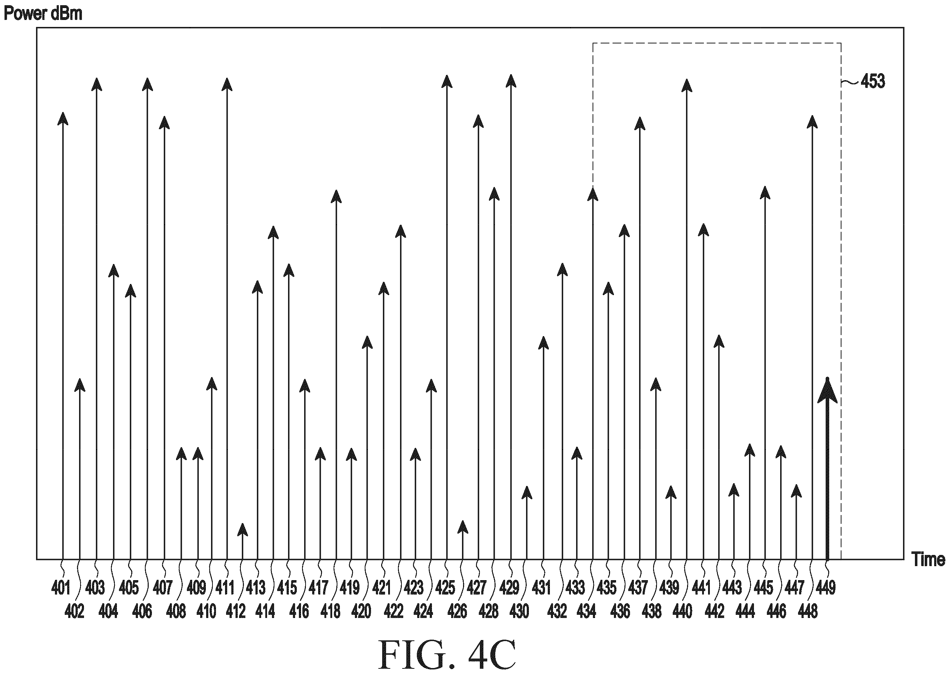

First, the table is described with reference to FIGS. 4A to 4C. Referring to FIG. 4A, a graph including transmission power for a plurality of times 401 to 449 is illustrated. The accumulated SAR (the accumulated SAR of Table 1) for a measurement time (the measurement time of Table 1), e.g., a measurement time including 50 time points, may be required to maintain a value below the maximum accumulated SAR (the max accumulated SAR of Table 1). The electronic device 101 may determine the transmission power of a communication signal to be transmitted at the current time point 449 to allow the accumulated SAR of nine future time points (e.g., the remain time of Table 1) in addition to the accumulated SAR at the current time point 449 and any past time points 409 to 448 (e.g., the average time of Table 1) to maintain below the maximum accumulated SAR. Further, as shown in FIG. 4B, the electronic device 101 may identify the transmission powers 452 which are one time point shifted from the transmission powers 451 at the current time point 449 and any past time points 409 to 448. Shifting by one time point may mean not reflecting data at the oldest time point (e.g., time point 409 in FIG. 4A). The number of transmission powers 452 at the current time point 449 and any past time points 410 to 448 is 40 and may be one smaller than the number, 41, of the transmission powers 451 of FIG. 4A. The electronic device 101 may determine the transmission power at the current time point 449 to allow the sum of the SAR by the transmission powers 452 and the SAR predicted at additional future 10 time points to maintain the maximum accumulated SAR or less. As shown in FIG. 4C, the electronic device 101 may identify the transmission powers 453 at the current time point 449 and any past time points 434 to 448 which are 25 time point shifted from the transmission powers 451. The number of transmission powers 453 is 16 and may be 25 smaller than the number, 41, of the transmission powers 451 of FIG. 4A. The electronic device 101 may determine the transmission power at the current time point 449 to allow the sum of the SAR by the transmission powers 453 and the SAR predicted at additional future 34 time points to maintain the maximum accumulated SAR or less. Although not shown, the electronic device 101 may manage a plurality of graphs each of which is one time point shifted.

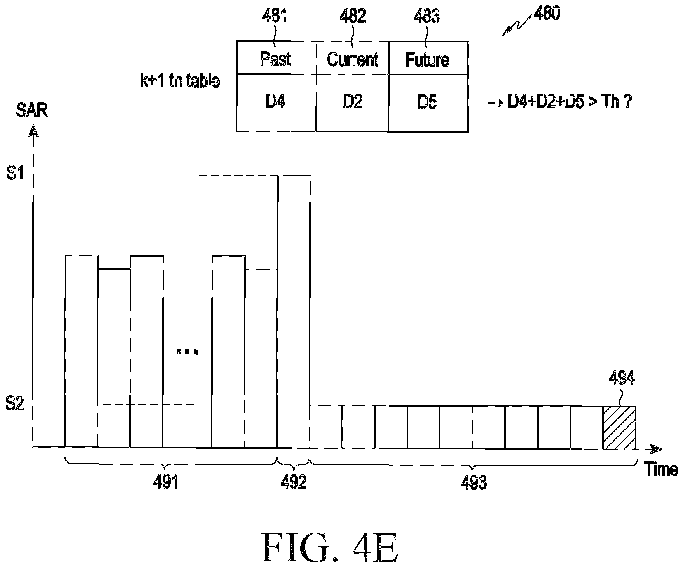

The period of calculating the SAR is the measurement period P of Table 1 and may be, e.g., the interval between the transmission powers in FIGS. 4A to 4C. The electronic device 101 may calculate and/or manage T/P-1 tables at a specific point in time. Hereinafter, with reference to FIGS. 4D and 4E, a configuration for identifying a predicted SAR value is described.

Referring to FIG. 4D, the electronic device 101 may identify the kth SAR table 460. The kth SAR table 460 may include D1, which is the accumulated SAR value 461 at at least one past time point, the maximum SAR value (D2) 462 at the current time, and the predicted SAR value (D3) 463 at at least one future time point. Referring to the graph, the accumulated SAR value corresponding to at least one past time point 461 may be D1. D1, which is the accumulated SAR value 461 at at least one past time point may be identified based on the antenna configuration. The number of at least one past time point may be a number that is one smaller than the total number (e.g., 100) of time points corresponding to the measurement time (e.g., 50 seconds) in the first table. N, which is the total number (e.g., 100) of time points may be a result of dividing the measurement time by the sampling period (or shift period). Accordingly, in the kth table, the number of at least one past time point may be k smaller than the total number of time points. The electronic device 101 may identify D1 which is the accumulated SAR value of the N-k past time points 471. The electronic device 101 may use the maximum SAR value S1 for the current time point 472. The maximum SAR value S1 (e.g., the normal max SAR in Table 1) may be the SAR value corresponding to a designated maximum transmission power (e.g., the normal max power of Table 1) in the electronic device 101. In another embodiment, for the current time point 472, the SAR value immediately before the current time point 472 may be used. In another embodiment, for the current time point 472, the average SAR value for the past time points 471 of the current time point 472 may be used. The electronic device 101 may calculate the sum of SAR values S2 (e.g., the backoff max SAR of Table 1) for the transmission power (e.g., the backoff max power of Table 1) backed off, for at least one future time point 473. The electronic device 101 may identify D3 as the accumulated SAR for at least one future time point 473. In the kth table, the number of at least one future time point may be k-1. Accordingly, the electronic device 101 may identify whether the total SAR sum D1+D2+D3 for N time points including N-k past time points, one current time point, and k-1 future time points exceeds the maximum accumulated SAR, for the kth table. Upon identifying the excess, the electronic device 101 may back off the transmission power of the current time point. Referring to FIG. 4E, the electronic device 101 may identify the k+1th table 480 as shown in FIG. 4E. For the k+1th table 480, the electronic device 101 may identify D4, which is the accumulated SAR value 481 of at least one past time point, D2, which is the maximum SAR value 482 of the current time point, and D5, which is the predicted SAR value 483 of at least one future time point. The electronic device 101 may identify whether the accumulated SAR value of D4+D2+D5 exceeds the maximum accumulated SAR. The number of at least one past time point 491 in the k+1th table may be one smaller than the number of at least one past time point 471 in the kth table. The number of at least one future time point 493 in the k+1th table may be one (494) larger than the number of at least one future time point 473 in the kth table.

According to various embodiments, in operation 303, the electronic device 101 may identify the past accumulated SAR value and the predicted SAR value at the current time point and future time point for a plurality of tables corresponding to at least one future time point. The electronic device 101 may identify the accumulated SAR value for a first table and a total of N-1 tables, which are shifted by i time points (where i is 1 or more and less than N-2) from the first table. In operation 305, the electronic device 101 may identify whether there is a table in which the sum of the accumulated SAR value and the predicted SAR value exceeds a threshold. If there is a table exceeding the threshold (yes in 305), the electronic device 101 may back off any one (or the maximum transmission power limit (MTPL)) of at least some transmission powers of the communication signals in operation 307. It will be appreciated by one of ordinary skill in the art that the backoff of transmission power may be replaced with backoff of maximum transmission power limit in the disclosure. If there is no table exceeding the threshold (no in 305), the electronic device 101 may transmit a communication signal in the set transmission power in operation 309. The backoff of the maximum transmission power value may mean backoff of the maximum transmission power value in various embodiments of the disclosure.

As described above, the electronic device 101 may determine the maximum transmission power value so that the average SAR magnitude used during the measurement time does not exceed the average SAR limit. Or, the electronic device 101 may determine the maximum transmission power value so that the accumulated SAR during the measurement time does not exceed the max accumulated SAR. The electronic device 101 may determine the maximum value of the maximum power for the next time period every time P. Conditions for operating in normal max power during next time P may be as follows.

Condition: Tx Room > SAR generated when operating in normal max power during next P (normal max SAR of Table 1) + SAR (backoff max SAR of Table 1) generated when operating in backoff max power during (Remain Time - P) = P X normal max SAR + (Remain Time - P) X backoff max SAR

In the condition, Tx Room may be the max accumulated SAR minus the SAR accumulated up to now. In the condition, (Remain Time - P) may be T - average time - P, e.g., the future time point described in connection with FIG. FIGS. 4A to 4E. P may mean the current time point. Average time may mean the past time point. Meeting the condition may mean that although the electronic device 101 sets the maximum transmission power of the normal max power during time P, there is no table in which the accumulated SAR exceeds the max accumulated SAR. Not meeting the condition may mean that there is a chance of presence of a table in which the accumulated SAR exceeds the max accumulated SAR if the electronic device 101 sets the maximum transmission power of the normal max power during time P, in which case the electronic device 101 may set the backoff max power as the maximum transmission power during time P.

Table 2 shows examples of variables and conditions.

[Table 2]

| [Example of variable settings] | |
| --- | --- |
| i. Normal MAX Power : 23dBm | |
| ii. | Backoff MAX Power : 20dBm |
| iii. | Measurement Time(T) : 100 seconds |
| iv. | Measurement Period(P) : 0.5 seconds |
| v. | Number of SAR Calculator tables : 199 |
| vi. | Average SAR LIMIT : 1.5mW/g |
| vii. | Max accumulated SAR : 150mW/g |
| viii. | When Normal Max SAR => 23dBm, SAR : 2mW/g |
| ix. | When Backoff Max SAR => 20dBm, SAR : 1mW/g |
| [Time Average when maximum power switches from normal max power to backoff max power] time X normal max power + (100 - average time) X backoff max power <= time when accumulated max SAR is met = Average time X 2 mW/g + (100 - average time) X 1mW/g <= 150 mW/g <=> Average time <=50 | |

In the example of Table 2, it is described that continuous use of the normal max power in the maximum transmission power for 50 seconds is possible and, after 50 seconds, backoff to the backoff max power is required. For example, it is hypothesized to transmit an RF signal in 23dBm which is the normal max power, for 50 seconds, transmit an RF signal in 23dBm which is the normal max power for the next P (0.5 seconds), and transmit an RF signal in 20dBm which is the backoff max power for 49.5 seconds which is (remain time - P). In this case, Tx Room may be 150mW/g - 50 X 2 mW/g, i.e., 50mW/g. The SAR generated for time P may be 2mW/g X 0.5 seconds, i.e., 1mW/g. The SAR generated during (remain time - P) may be 49.5 seconds X 1mW/g, i.e., 49.5 mW/g. In this case, it may be identified that the accumulated SAR during P and (remain time - P) is 50.5 mW/g which exceeds the Tx room, and thus, it is required to back off the maximum value of the transmission power at time P. The above-described example is described with reference to FIG. 3B which describes the transmission power associated with one RAT. For example, referring to FIG. 3B, up to A seconds (e.g., 50 seconds), the maximum transmission power may be set to the normal max power 351 but, after A seconds, it may be identified to be backed off to the backoff max power 352. The slope of the second portion 362 of the accumulated SAR may be formed to be smaller than the slope of the first portion 361 of the accumulated SAR according to the backoff of the maximum value of the maximum transmission power. It may be identified that the average SAR 331 before A seconds exceeds the average SAR limit 340, but at the time when it is 100 seconds according to backoff, the average SAR 332 is identical to the value of the average SAR limit 340. Meanwhile, as is described below, a case may occur where the electronic device 101 transmits RF signals for two or more RATs. For example, the electronic device 101 may transmit a first RF signal based on E-UTRA and a second RF signal based on NR according to EN-DC. In this case, the electronic device 101 may back off the maximum value of the transmission power of the RF signal so that the accumulated SAR does not exceed the accumulated max SAR. The electronic device 101 may set the priority of the RAT to be backed off. For example, the electronic device 101 may be configured to preferentially back off the transmission power of the RF signal based on NR, which is the RAT corresponding to the SCG, rather than E-UTRA, which is the RAT corresponding to the MCG. Meanwhile, EN-DC is exemplary, and if it is NE-DC, the electronic device 101 may be configured to preferentially back off the maximum value of the transmission power of the RF signal based on the E-UTRA. In DC, it is also exemplary to preferentially back off the maximum value of the transmission power of the RF signal based on the SCG, and the priority of the backoff is not limited.

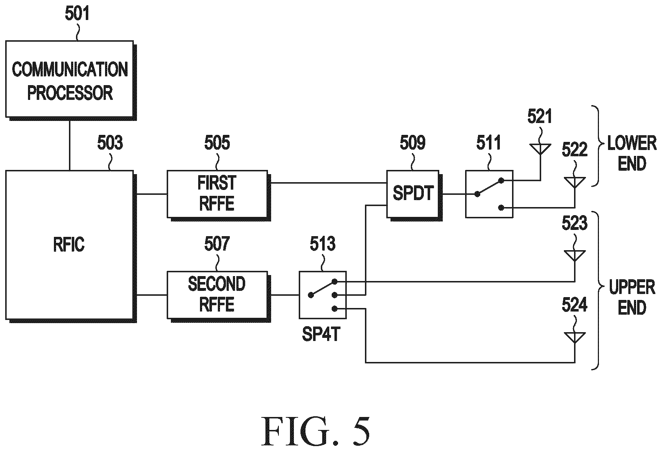

FIG. 5 is a block diagram illustrating a plurality of transmission paths of an electronic device according to various embodiments.

According to various embodiments, the communication processor (e.g., at least one of the first communication processor 212, the second communication processor 214, or the integrated communication processor 260) may transmit and/or receive a baseband signal to/from an RFIC 503 (e.g., at least one of the first RFIC 222, the second RFIC 224, the third RFIC 226, or the fourth RFIC 228). The RFIC 503 may process RF signals corresponding to, e.g., two or more RF paths. Here, the RF path may include, e.g., at least one piece of hardware (e.g., at least one of an RFIC, RFFE, or antenna) for transmitting an RF signal. For example, the RFCI 503 may receive two or more baseband signals from the communication processor 501 and generate two or more RF signals respectively corresponding thereto. The two or more RF signals may have different frequency bands, e.g., but are not limited thereto. At least one of generating, providing, or inputting to the antenna two or more RF signals may be performed to overlap at least partially, which may be referred to as 2 TX. It will be appreciated by one of ordinary skill in the art that although the RFIC 503 is shown as one module in the example of FIG. 5, this is an example, and the RFIC 503 may be implemented as a plurality of modules for the respective RF signals. Two or more RF signals may be generated, e.g., based on the MRDC or NEDC or ENDC or based on dual-sim DSDA mode, and there is no limit to the types of multiple RF signals.

According to various embodiments, the RFIC 503 may provide a first RF signal to the first RFFE 505. The RFIC 505 may provide a second RF signal to the second RFFE 507. The first RFFE 505 may process (e.g., amplify) and provide the received first RF signal. The second RFFE 507 may process (e.g., amplify) and provide the received second RF signal. For example, the RFFEs 505 and 507 may amplify received RF signals to a degree of amplification determined by control of the outside (e.g., the communication processor 501). The communication processor 501 may determine the amplification degree of the RFFEs 505 and 507 based on the maximum transmission power limit and/or transmission power determined as described above. Although not shown, the amplification degree of the RFFEs 505 and 507 may be controlled based on an average power tracking (APT) module and/or an envelope tracking (ET) module. According to various embodiments, one RFFE may process a plurality of RF signals.

According to various embodiments, the first RFFE 505 may be connected to a single pole double throw (SPDT) switch 509, and an output terminal of the SPDT switch 509 may be connected to the switch 511. The switch 511 may be configured to selectively connect the output terminal of the SPDT switch 509 to either the first antenna 521 or the second antenna 522. The second RFFE 507 may be connected to a single pole 4 throw (SP4T) switch 513. The SP4T switch 513 may be configured to selectively connect the output end of the second RFFE 507 to any one of the SPDT switch 509, the third antenna 523, or the fourth antenna 524. Meanwhile, the antennas 521, 522, 523, and 524 may be disposed, e.g., on the outer surface of the housing of the electronic device 101, but is not limited thereto. In one example, it may be hypothesized that the antennas 521 and 522 may be disposed on one side (e.g., upper end) of the housing of the electronic device 101, and the antennas 523 and 524 may be disposed on the other side (e.g., lower end) of the housing of the electronic device 101. In this case, the distance between the antennas 521 and 522 may be shorter than the distance between the first antenna 521 and the third antenna 523, the distance between the first antenna 521 and the fourth antenna 524, the distance between the second antenna 522 and the third antenna 523, or the distance between the second antenna 522 and the fourth antenna 524. The distance between the antennas 523 and 524 may be shorter than the distance between the third antenna 523 and the first antenna 521, the distance between the third antenna 523 and the second antenna 522, the distance between the fourth antenna 524 and the first antenna 521, or the distance between the fourth antenna 524 and the second antenna 522. Meanwhile, two RF signals may be at least partially simultaneously input to one antenna. For example, the RF signal of the B5 frequency band and the RF signal of the N2 frequency band may be at least partially simultaneously input to the first antenna 521.

For example, whether it is determined whether the SAR restrictions are violated based on the sum of exposures (e.g., SARs and/or PDs) generated by the plurality of antennas or it is determined whether the SAR restrictions are violated independently from the exposures generated by the plurality of antennas may be determined by Equation 1 below.

[Equation 1]

$$(SAR_1 + SAR_2)^{1.5}/R \leq 0.04$$

In Equation 1, $SAR_1$ may be the SAR generated by one antenna, and $SAR_2$ may be the SAR generated by another antenna, and their unit may be, e.g., W/kg. R for the sum of various SARs may be shown in Table 3, for example. Meanwhile, the values, 1.5 and 0.04, in Equation 1 are merely exemplary and are not limited thereto.

[Table 3]

| Sum of SARs ($SAR_1 + SAR_2$) (W/Kg) | Minimum separation distance (minimum value of R) (mm) |
|---|---|
| 3.2 | 143 |
| 2.8 | 117 |
| 2.4 | 93 |
| 2 | 71 |
| 1.6 | 51 |
| 1.4 | 41 |
| 1.2 | 33 |
| 1.0 | 25 |

(continued)

| Sum of SARs ($SAR_1$ + $SAR_2$) (W/Kg) | Minimum separation distance (minimum value of R) (mm) |
|---|---|
| 0.8 | 18 |

For example, it is hypothesized that in 2TX, the sum of SARs generated from the third antenna 523 and the fourth antenna 524 is 3.2 W/Kg. Meanwhile, as the third antenna 523 and the fourth antenna 524 both are disposed at an upper end of the electronic device 101, the spacing may be less than 143mm. In this case, to determine whether the SAR rule is instantaneously violated or the accumulated SAR rule is violated by the electronic device 101, it may be required to determine whether the sum of SARs generated from the third antenna 523 and the fourth antenna 524 violates the SAR rule. Meanwhile, it is hypothesized that in 2TX, the sum of SARs generated from the third antenna 523 and the first antenna 521 is 3.2 W/Kg. Meanwhile, as the third antenna 523 and the first antenna 521, respectively, are disposed at an upper end and lower end of the electronic device 101, the spacing may be 143mm or more. In this case, to determine whether the SAR rule is instantaneously violated or the accumulated SAR rule is violated by the electronic device 101, it may be required to determine whether the sum of SARs generated from the third antenna 523 violates the SAR rule and/or whether the sum of SARs generated from the first antenna 521 violates the SAR rule.

As described above, it may be expressed that the antennas (e.g., the pair of the first antenna 521 and the second antenna 522 or the pair of the third antenna 523 and the fourth antenna 524) where the sum of the SARs is considered to determine whether the SAR rule is violated according to satisfaction of Equation 1 are included in the same antenna group. When the distance between antennas is relatively small (e.g., smaller than the distance related to Equation 1), they may be included in the same antenna group. Further, it may be expressed that the antennas (e.g., the pair of the first antenna 521 and the third antenna 522, the pair of the first antenna 521 and the fourth antenna 524, the pair of the second antenna 522 and the third antenna 522, or the pair of the second antenna 522 and the fourth antenna 524) where independent SARs are considered, rather than the sum of the SARs, are considered to determine whether the SAR rule is violated according to failure to meet Equation 1 are included in different antenna groups. When the distance between antennas is relatively large (e.g., larger than the distance related to Equation 1), they may be included in different antenna groups.

When it is determined whether to back off the maximum transmission power limit based on the accumulated SAR (or average SAR), the backoff of the maximum transmission power limit for at least one antenna when the antennas for 2TX are included in the same antenna group may be performed earlier than the backoff of the maximum transmission power limit for at least one antenna when the antennas for 2TX are included in different antenna groups. As described above, when the sum of the accumulated SAR and the predicted SAR at the current time and/or the future time exceeds the Max accumulated SAR, the backoff of the maximum transmission power limit at the current time may be performed. If the antennas are included in the same antenna group, the sum of the SARs predicted at the current time and/or the future time may be set to the sum of the SARs predicted at the current time and/or the future time for one antenna and the sum of the SARs predicted at the current time and/or the future time for another antenna. Accordingly, when the sum of the accumulated SAR for both the antennas, the SAR predicted at the current time and/or the future time for one antenna, and the SAR predicted at the current time and/or the future time for the other antenna exceeds the Max accumulated SAR, the backoff of the maximum transmission power limit at the current time may be performed. Meanwhile, when the antennas are included in different antenna groups, the backoff of the maximum transmission power limit at the current time may be performed if the sum of the accumulated SAR for one antenna, and the predicted SAR at the current time and/or the future time for one antenna exceeds the Max accumulated SAR, or if the sum of the accumulated SAR for the other antenna, and the predicted SAR at the current time and/or the future time for the other antenna exceeds the Max accumulated SAR, the backoff of the maximum transmission power limit at the current time may be performed. Accordingly, the backoff of the maximum transmission power limit for at least one antenna when the antennas for 2TX are included in the same antenna group may be performed earlier than the backoff of the maximum transmission power limit for at least one antenna when the antennas for 2TX are included in different antenna groups.

Meanwhile, when the housing of a foldable device or rollable device is transformed, the distance between antennas for 2TX may be changed. For example, when the foldable device is in the unfolded state, antennas for 2TX may be included in different antenna groups. When the foldable device is in the folded state, antennas for 2TX may be included in the same antenna group. As is described below, the electronic device 101 according to various embodiments may set a condition for determining whether to back off at least one of the maximum transmission power limits of the RF signals through the antennas for 2TX based on the state of the housing. Accordingly, the SAR violation condition may not be violated. For example, in the folded state of the foldable device, a condition for determining whether to perform backoff, corresponding to when the antennas for 2TX are included in the same antenna group may be used or, in the unfolded state of the foldable device, a condition for determining whether to perform backoff, corresponding to when the antennas for 2TX are included in different antenna groups may be used. Accordingly, the backoff time for any one RF path may be delayed or the backoff may not be performed, so that more stable communication may be possible.

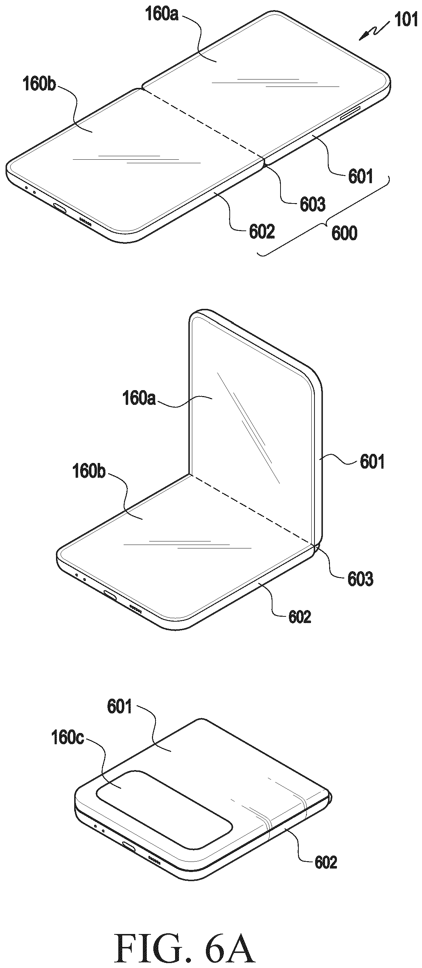

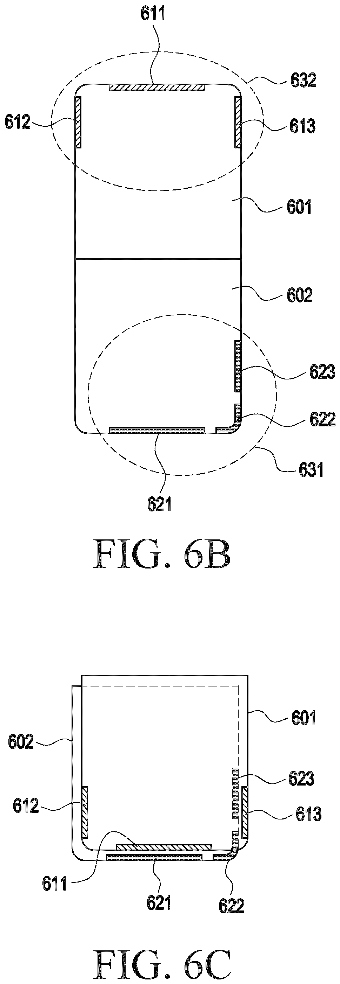

FIG. 6A is a view illustrating a change in the state of a housing of an electronic device according to various embodiments. The embodiment of FIG. 6A is described with reference to FIGS. 6B and 6C. FIGS. 6B and 6C are views illustrating a distance between antennas according to various embodiments.

According to various embodiments, the electronic device 101 may include a first housing 601, a second housing 602, a hinge structure 603, and a display module 190. The first housing 601, the second housing 602, and/or the hinge structure 603 may be referred to as a housing 600, but there is no limitation to the components included in the housing 600. A first portion 190a of the display module 190 may be seated in the first housing 601 (or visually exposed through an opening formed by the first housing 601), and a second portion 190b of the display module 190 may be seated in the second housing 602 (or visually exposed through an opening formed by the second housing 1302). At least a portion of the first portion 190a and at least a portion of the second portion 190b may be flexible. Further, the hinge structure 603 may include a mechanical structure to allow the first housing 601 to rotate relative to the second housing 602. In the left-side embodiment of FIG. 6A, the state of at least one housing (e.g., the first housing 601 and the second housing 602) may be represented as a first state (e.g., fully unfolded state). In the first state, the first portion 190a of the display module 190 and the second portion 190b of the display module 190 may face in substantially the same direction. FIG. 6B illustrates antennas in the state of at least one housing (e.g., the first housing 601 and the second housing 602) is the first state (e.g., fully unfolded state). For example, in the first state, the first antenna 621, the second antenna 622, and the third antenna 623 may be included in the first antenna group 631. For example, as the distance between the first antenna 621 and the second antenna 622 is less than a threshold distance (e.g., a threshold distance according to Equation 1 set based on the sum SAR), the distance between the second antenna 622 and the third antenna 623 is less than the threshold distance, and the distance between the first antenna 621 and the third antenna 623 is less than the threshold distance, the first antenna 621, the second antenna 622, and the third antenna 623 may be included in the first antenna group 631. Meanwhile, in the first state, the fourth antenna 611, the fifth antenna 612, and the sixth antenna 613 may be included in the second antenna group 632. For example, as the distance between the fourth antenna 611 and the fifth antenna 612 is less than the threshold distance, the distance between the fifth antenna 612 and the sixth antenna 613 is less than the threshold distance, and the distance between the fourth antenna 611 and the sixth antenna 613 is less than the threshold distance, the fourth antenna 611, the fifth antenna 612, and the sixth antenna 613 may be included in the second antenna group 632. Meanwhile, the distance between the third antenna 623 included in the first antenna group 631 and the sixth antenna 613 included in the second antenna group 632 may be the shortest distance among the distances between the respective antennas of the different antenna groups 631 and 632. The distance between the third antenna 623 and the sixth antenna 613 may be the threshold distance or more. Accordingly, when two RF signals are transmitted through at least one antenna among the antennas 621, 622, and 623 included in the first antenna group 631, the backoff of the maximum transmission power limit at the current time may be performed when the sum of the accumulated SAR of the first RF signal, the accumulated SAR of the second RF signal, the predicted SAR at the current time and/or the future time of the first RF signal, and the predicted SAR at the current time and/or the future time of the second RF signal exceeds the Max accumulated SAR according to 2TX based on the same antenna group. Even when two RF signals are transmitted through at least one antenna among the antennas 611, 612, and 613 included in the second antenna group 632, the electronic device 101 may perform backoff of the maximum transmission power limit at the current time when the sum of the accumulated SAR of the first RF signal, the accumulated SAR of the second RF signal, the predicted SAR at the current time and/or the future time of the first RF signal, and the predicted SAR at the current time and/or the future time of the second RF signal exceeds the Max accumulated SAR according to 2TX based on the same antenna group. When the RF signal is transmitted through one of the antennas 621, 622, and 623 included in the first antenna group 631, and the RF signal is transmitted through one of the antennas 611, 612, and 613 included in the second antenna group 632, the electronic device 101 may independently determine whether to back off the maximum transmission power limit based on the sum of the accumulated SARs for each RF path and the sum of the predicted SARs at the current and/or future time.

Meanwhile, the first housing 601 may rotate relative to the second housing 602 in which case at least a portion of the display module 190 may be folded. In the middle embodiment of FIG. 6A, the state of at least one housing (e.g., the first housing 601 and the second housing 602) may be represented as a second state (e.g., a state different from the first state and/or the third state). The second state is a state different from the first state and/or the third state. For example, the angle (or relative position) between the housings 601 and 602 may differ from the angle (or relative position) between the housings 601 and 602 in the first state and/or third state. The second state is an intermediate state between the unfolded state and the folded state and may be referred to as, e.g., a half-folded state or a transition state. Further, the first housing 601 may further rotate relative to the second housing 602 in which case at least a portion of the display module 190 may be further folded. In the right-side embodiment of FIG. 6A, the state of at least one housing (e.g., the first housing 601 and the second housing 602) may be represented as a third state (e.g., folded state). In the third state, the first portion 190a of the display module 190 and the second portion 190b of the display module 190 may substantially face each other. FIG. 6C illustrates antennas in the state of at least one housing (e.g., the first housing 601 and the second housing 602) is the third state (e.g., folded state). In this case, all of the distances between two pairs of the antennas 611, 612, 613, 621, 622, and 623 may be less than the threshold distance. For example, in the first state, the third antenna 623 and the sixth antenna 613 are included in different antenna groups, but in the third state, the third antenna 623 and the sixth antenna 613 may be included in the same group. Accordingly, when a first RF signal is provided using the third antenna 623, and a second RF signal is provided using the sixth antenna 613 in the third state, backoff of the maximum transmission power limit at the current time may be performed when the sum of the accumulated SAR of the first RF signal, the accumulated SAR of the second RF signal, the predicted SAR at the current time and/or the future time of the first RF signal, and the predicted SAR at the current time and/or the future time of the second RF signal exceeds the Max accumulated SAR according to 2TX based on the same antenna group. As described above, the criterion for determining whether to back off may be dynamically changed depending on the state (e.g., shape) of the housing and, according to various embodiments, the electronic device 101 may determine whether to back off the maximum transmission power limit based on the state of the housing.

Meanwhile, e.g., to maintain the first antenna group 611 and the second antenna group 621 as different antenna groups, the angle between the first housing 601 and the second housing 602 may be required to be a threshold angle or more. The threshold angle here may be set to differ depending on the size of the electronic device 101. For example, a threshold distance R may be required to meet Equation 1, and the angle between the first housing 601 and the second housing 602 meeting the threshold distance R may be different from the threshold angle depending on the size of the electronic device 101. In one example, the electronic device 101 may define only two housing states (e.g., an unfolded state and a folded state), and the housing state may be determined depending on whether the angle between the housings 601 and 602 is larger than or equal to the threshold angle. For example, as the size of the electronic device 101 is relatively large, the threshold angle may be set to be relatively small, but there is no limit.

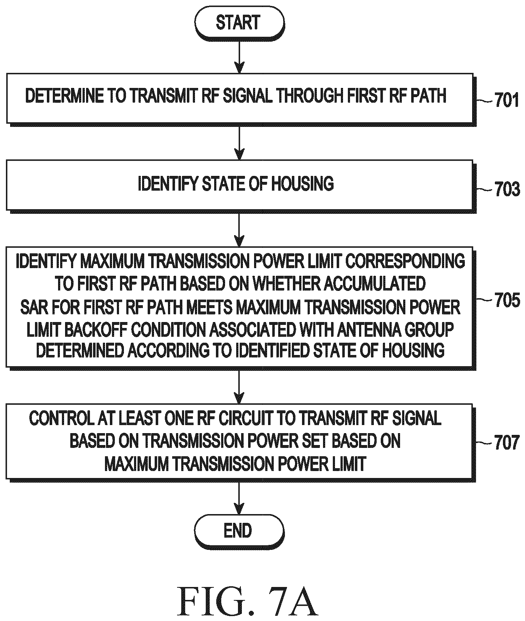

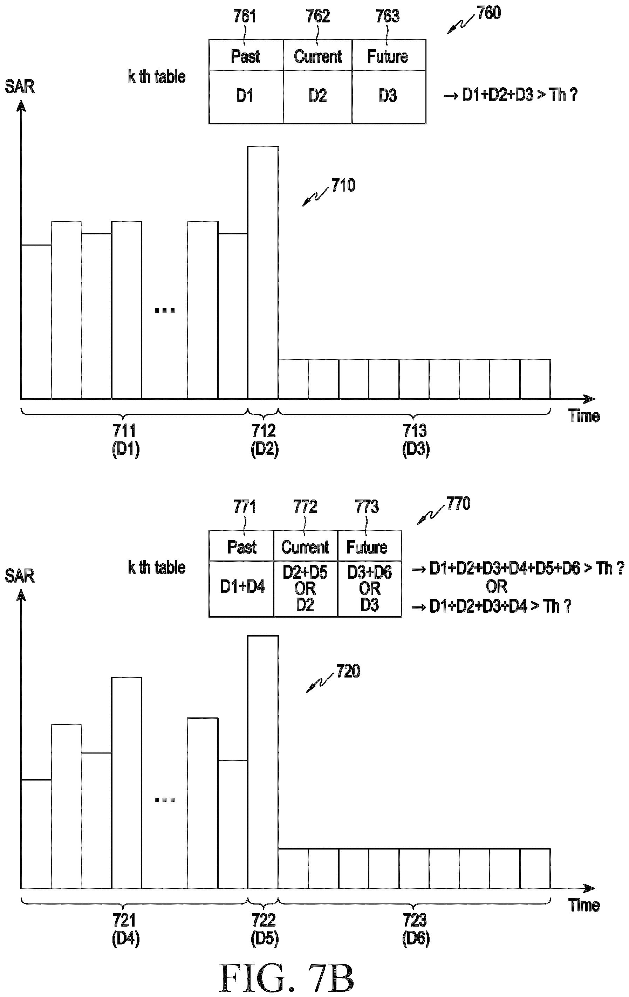

FIG. 7A is a flowchart illustrating an operation method of an electronic device according to various embodiments. The embodiment of FIG. 7A is described with reference to FIG. 7B. FIG. 7B illustrates tables of transmission power per time according to various embodiments.

According to various embodiments, an electronic device 101 (e.g., at least one of the processor 120, the first communication processor 212, the second communication processor 214, or the integrated communication processor 260) may determine to transmit an RF signal through a first RF path in operation 701. The first RF path may be selected based on, for example, the frequency band for the RF signal, but is not limited to a method and/or a reference for selecting the first RF path. In operation 703, the electronic device 101 may identify the state of at least one housing. In one example, the electronic device 101 may identify a state defined in association with a relative position (or arrangement direction) between at least one housing as the state of the housing. For example, the electronic device 101 may identify the unfolded state (or the first state), the half-unfolded state (or the second state), and the folded state (or the third state) as the state of the housing, and the number and/or the expression method of the states are not limited. For example, the processor 120 (or an application processor) may obtain sensing data (e.g., magnetic sensing data, but not limited thereto) for determining at least one of the degree of rotation of the hinge structure 603, the angle between the housings 601 and 602, or the distance between the portions 190a and 190b from the sensor module 176 (e.g., a magnetic sensor). The processor 120 may identify the state of the housing based on the sensing data and provide the identified state of the housing to a communication processor (e.g., at least one of the first communication processor 212, the second communication processor 214, or the integrated communication processor 260). The memory of the communication processor may previously store, e.g., information about the antenna group including each of the antennas, corresponding to each of the states of the housing. The communication processor may identify the antenna group including the first RF path, corresponding to the identified state of the housing, based on the corresponding information. In another example, the electronic device 101 may identify a numerical value for indicating a relative position (or arrangement direction) between at least one housing as a state of the housing. For example, the electronic device 101 may identify at least one of the degree of rotation of the hinge structure 603, the distance between the portions 190a and 190b, or the angle between the housings 601 and 602 as the state of the housing. The processor 120 (or an application processor) may identify at least one of the degree of rotation of the hinge structure 603, the distance between the portions 190a and 190b, or the angle between the housings 601 and 602, based on sensing data from the sensor module 176, and may provide the same to the communication processor (e.g., at least one of the first communication processor 212, the second communication processor 214, or the integrated communication processor 260). The memory of the communication processor may previously store, e.g., information about the antenna group including each of the antennas corresponding to each of a plurality of numerical values (or ranges of numerical values). The communication processor may identify the antenna group including the first RF path, corresponding to the identified state of the housing, based on the corresponding information. It will be understood by one of ordinary skill in the art that the above-described method of expressing the housing state is not limited.

According to various embodiments, in operation 705, the electronic device 101 may identify the maximum transmission power limit corresponding to the first RF path, based on whether the accumulated SAR for the first RF path meets the maximum transmission power limit backoff condition associated with the antenna group determined according to the identified state of the housing. In operation 707, the electronic device 101 may control at least one RF circuit to transmit an RF signal based on the transmission power set based on the maximum transmission power limit. As described above, the electronic device 101 may identify the antenna group corresponding to the first RF path, based on the state of the at least one housing. For example, the electronic device 101 may manage the accumulated SAR for each antenna group. If there is a history of transmission of another RF signal through at least some of the antennas included in the antenna group corresponding to the first RF path, and/or if transmission is scheduled, the electronic device 101 may determine whether to back off the maximum transmission power limit by further considering the previously generated SAR and/or the SAR scheduled to occur, based on the other RF signal. If there is no history of transmission of another RF signal through at least some of the antennas included in the antenna group corresponding to the first RF path and transmission of another RF signal is not scheduled, the electronic device 101 may determine whether to back off the maximum transmission power limit considering a pre-generated SAR and/or an SAR scheduled to be generated, based on the RF signal.

For example, referring to FIG. 7B, the electronic device 101 may identify a kth SAR table 760 corresponding to the first RF path. For example, in the first antenna group, it is assumed that an SAR by another RF signal does not occur and an SAR by another RF signal is not scheduled to occur for the times (past time, current time, and future time) included in the kth SAR table 760. Accordingly, only SAR based on the first RF path may be considered in the corresponding antenna group. The kth SAR table 760 may include D1, which is an accumulated SAR value 761 at at least one past time 711 associated with the first RF path, a maximum SAR value 762 D2 at the current time 712, and an estimated SAR value 763 D3 at at least one future time 713. Referring to the graph, the accumulated SAR value corresponding to at least one past time point 711 may be D1. The electronic device 101 may use the maximum SAR value S1 for the current time point 712. The maximum SAR value S1 (e.g., the normal max SAR in Table 1) may be the SAR value corresponding to a designated maximum transmission power (e.g., the normal max power of Table 1) in the electronic device 101. The electronic device 101 may calculate the sum of SAR values S2 (e.g., the backoff max SAR of Table 1) for the transmission power (e.g., the backoff max power of Table 1) backed off, for at least one future time point 713. The electronic device 101 may identify D3 as the accumulated SAR for at least one future time point 713. In the kth table, the number of at least one future time point may be k-1. Accordingly, the electronic device 101 may identify whether the total SAR sum D1+D2+D3 for N time points including N-k past time points, one current time point, and k-1 future time points exceeds the maximum accumulated SAR, for the kth table. Upon identifying the excess, the electronic device 101 may back off the transmission power of the current time point. As described above, when the RF signal is transmitted only through the first RF path in the antenna group, whether to back off the maximum transmission power limit may be determined based on the kth SAR table 760 corresponding to the first RF path.

Meanwhile, as another example, referring to the example on the lower side of FIG. 7B, the electronic device 101 may identify the kth SAR table 770 corresponding to the second RF path. For example, it is assumed that another RF signal has been transmitted from the second RF antenna (or the second RF path) of the first antenna group including the first RF path and is scheduled to be transmitted. As the first RF path and the second RF path are included in one antenna group, whether to back off the maximum transmission power limit may require consideration of both the SAR associated with the first RF path and the SAR associated with the second RF path. For example, referring to the graph, the accumulated value of the SAR by another RF signal corresponding to at least one past time 721 associated with the second RF path may be D4. In FIG. 7B, the times 711 of the first RF path may be substantially the same as the times 721 associated with the second RF path, the time 712 of the first RF path may be substantially the same as the time 722 associated with the second RF path, and the times 713 of the first RF path may be substantially the same as the times 723 associated with the second RF path. The electronic device 101 may use the maximum value S1 of the SAR for another RF signal based on the second RF path at the current time 722. The maximum value S1 (e.g., normal max SAR in Table 1) of the SAR may be an SAR value D5 corresponding to the maximum transmission power (e.g., normal max power in Table 1) designated by the electronic device 101. The electronic device 101 may calculate at least one future time 723 as the sum of SAR values S2 (e.g., backoff max SAR in Table 1) for transmission power (e.g., backoff max power in Table 1) backed off for another RF signal based on the second RF path. The electronic device 101 may identify D6 as an accumulated SAR for at least one future time 723. In FIG. 7B, with respect to the first RF path, an SAR of D1 occurred at at least one past time 711, an SAR of D2 is predicted at a current time, and an SAR of D3 may be predicted at a future time. Further, with respect to the second RF path, an SAR of D4 occurred at at least one past time 721, an SAR of D5 is predicted at a current time, and an SAR of D6 may be predicted at a future time. Accordingly, when only the first RF path is included in the antenna group, whether to back off the maximum transmission power limit may be determined based on the table 760 including D1, D2, and D3 associated with the first RF path.

Meanwhile, when both the first RF path and the second RF path are included in one antenna group, whether to back off the maximum transmission power limit may be determined based on the table 770 for at least some of the SARs D1, D2, and D3 associated with the first RF path and the SARs D4, D5, and D6 associated with the second RF path. The electronic device 101 may identify a kth SAR table 770 corresponding to an antenna group including the first RF path and the second RF path. The kth SAR table 770 may identify D1+D4, which is the sum of D1, which is the accumulated SAR value at at least one past time 711 of the first RF path, and D4, which is the accumulated SAR value by another RF signal at at least one past time 721 of the second RF path, as the accumulated SAR value 771 corresponding to the past time. The electronic device 101 may identify, e.g., D2+D5, which is the sum of the maximum SAR value 762 (D2) at the current time 712 of the first RF path and the maximum SAR value D5 at the current time 722 of the second RF path, as the SAR value 772 at the current time in the kth SAR table 770. In another example, the electronic device 101 may identify the maximum SAR value 762 (D2) at the current time 712 of the first RF path as the SAR value 772 at the current time in the kth SAR table 770. This may mean that it is assumed that another RF signal is not transmitted through the second RF path at the current time. For example, the electronic device 101 may identify D3+D6, which is the sum of D3 of the future time 713 of the first RF path and D6 of the future time 723 of the second RF path, as the SAR value 773 at the future time in the kth SAR table 770. In another example, the electronic device 101 may identify D3, which is the SAR at the future time 713 of the first RF path, as the SAR value 773 at the future time in the kth SAR table 770. This may mean that it is assumed that another RF signal is not transmitted through the second RF path at a future time. Accordingly, the electronic device 101 may back off the maximum transmission power limit (or transmission power) corresponding to the RF signal and/or the maximum transmission power limit (or transmission power) corresponding to another RF signal, based on whether D1+D2+D3+D4+D5+D6 (or, in another example, D1+D2+D3+D4), which is the sum of the SAR value 771 at the past time, the SAR value 772 at the current time, and the SAR value 773 at the future time, exceeds the threshold value Th.

Meanwhile, in the embodiments according to FIGS. 7A and 7B, the accumulated amount and the predicted amount of SAR have been described, but this is an example of the case where the RF signal is, e.g., 6 GHz or less, and it will be understood by one of ordinary skill in the art that a power density (PD) may be used interchangeably and/or additionally for RF signals exceeding 6 GHz. In various embodiments of the disclosure, at least some of the at least one SAR may be replaced with a PD, and the SAR and the PD may be considered together, and accordingly, the SAR and/or the PD may be referred to as exposure. For example, the electronic device 101 may simultaneously transmit an RF signal of 6 GHz or less and an RF signal of more than 6 GHz. In this case, the electronic device 101 may determine whether to back off the maximum transmission power limit using both the SAR and the PD.

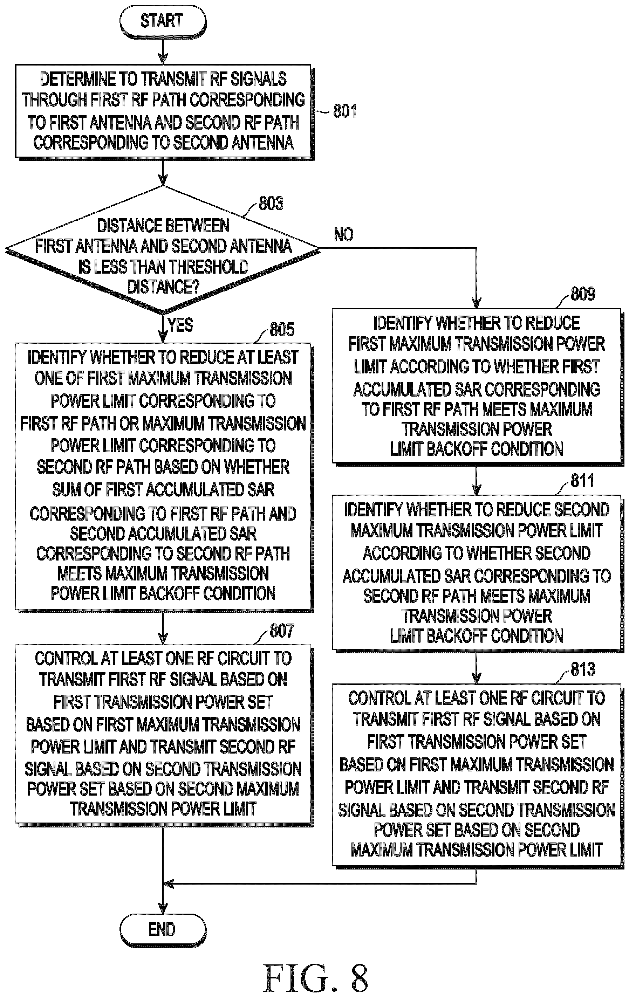

FIG. 8 is a flowchart illustrating a method for operating an electronic device according to various embodiments.

According to an embodiment, the electronic device 101 (e.g., at least one of the processor 120, the first communication processor 212, the second communication processor 214, or the integrated communication processor 260) may determine to transmit RF signals via a first RF path corresponding to a first antenna and a second RF path corresponding to a second antenna in operation 801. In operation 803, the electronic device 101 may identify whether the distance between the first antenna corresponding to the first RF path and the second antenna corresponding to the second RF path is less than a threshold distance. Here, the threshold distance may be a threshold distance for determining whether the first antenna and the second antenna are included in the same antenna group. It will be appreciated by one of ordinary skill in the art that the operation of identifying whether the first antenna and the second antenna are less than the threshold distance in operation 803 may be replaced with the operation of identifying whether the first antenna and the second antenna are included in the same antenna group, and both the operations may be performed interchangeably in the embodiments of the disclosure.

According to various embodiments, when the distance between the first antenna and the second antenna is less than the threshold distance (Yes in 803), the electronic device 101 may identify whether to reduce at least one of the first maximum transmission power limit corresponding to the first RF path or the second maximum transmission power limit corresponding to the second RF path, based on whether the sum of the first accumulated SAR corresponding to the first RF path and the second accumulated SAR corresponding to the second RF path meets the maximum transmission power limit backoff condition, in operation 805. As described above, when the distance between the first antenna and the second antenna is less than the threshold distance, the sum of the accumulated SAR of the first RF path and the accumulated SAR of the second RF path may be used to determine whether the maximum transmission power limit backoff condition is met. For example, when the total sum of the sum of the accumulated SAR of the first RF path and the accumulated SAR of the second RF path and the sum of the SARs predicted to be generated at the current time and/or the future time exceeds the threshold SAR, the electronic device 101 may determine to reduce at least one of the first maximum transmission power limit corresponding to the first RF path or the second maximum transmission power limit corresponding to the second RF path. If the total sum of the sum of accumulated SAR of the first RF path and the accumulated SAR of the second RF path, and the sum of the SARs predicted to be generated at the current time and/or the future time does not exceed the threshold SAR, the electronic device 101 may not back off the first maximum transmission power limit corresponding to the first RF path and the second maximum transmission power limit corresponding to the second RF path. In operation 807, the electronic device 101 may control at least one RF circuit to transmit the first RF signal based on the first transmission power set based on the first maximum transmission power limit and to transmit the second RF signal based on the second transmission power set based on the second maximum transmission power limit.

According to various embodiments, when the distance between the first antenna and the second antenna is equal to or larger than the threshold distance (No in 803), the electronic device 101 may identify whether to reduce the first maximum transmission power limit according to whether the first accumulated SAR corresponding to the first RF path meets the maximum transmission power limit backoff condition in operation 809. In operation 811, the electronic device 101 may identify whether to reduce the second maximum transmission power limit according to whether the second accumulated SAR corresponding to the second RF path meets the maximum transmission power limit backoff condition. As described above, when the distance between the first antenna and the second antenna is larger than or equal to the threshold distance, the accumulated SAR of the first RF path and the accumulated SAR of the second RF path may be independently used to determine whether the maximum transmission power limit backoff condition is met. For example, when the sum of the accumulated SAR of the first RF path and the SAR predicted to be generated at the current time and/or the future time for the first RF path exceeds the threshold SAR, the electronic device 101 may determine to reduce the first maximum transmission power limit corresponding to the first RF path. When the sum of the accumulated SAR of the first RF path and the SAR predicted to be generated at the current time and/or the future time for the first RF path is less than or equal to the threshold SAR, the electronic device 101 may not back off the first maximum transmission power limit corresponding to the first RF path. For example, when the sum of the accumulated SAR of the second RF path and the SAR predicted to be generated at the current time and/or the future time for the second RF path exceeds the threshold SAR, the electronic device 101 may determine to reduce the second maximum transmission power limit corresponding to the second RF path. When the sum of the accumulated SAR of the second RF path and the SAR predicted to be generated at the current time and/or the future time for the second RF path is less than or equal to the threshold SAR, the electronic device 101 may not back off the second maximum transmission power limit corresponding to the second RF path. In operation 813, the electronic device 101 may control at least one RF circuit to transmit the first RF signal based on the first transmission power set based on the first maximum transmission power limit and to transmit the second RF signal based on the second transmission power set based on the second maximum transmission power limit.

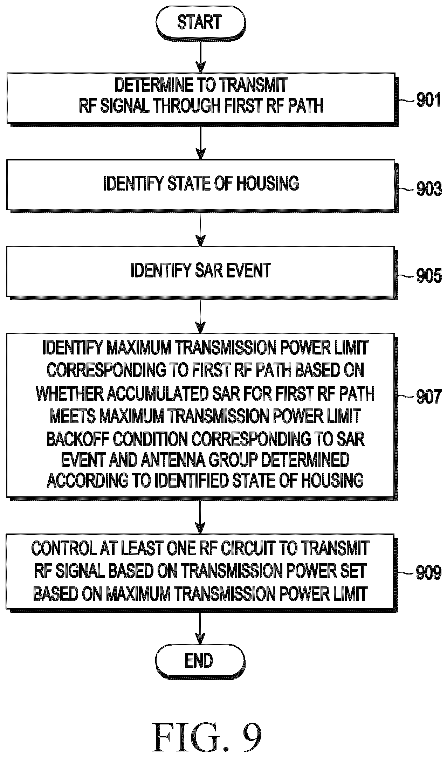

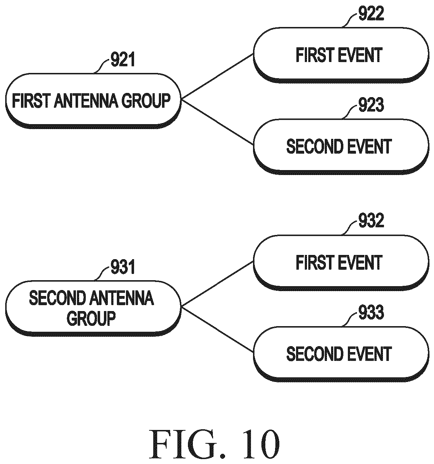

FIG. 9 is a flowchart illustrating an operation method of an electronic device according to various embodiments. The embodiment of FIG. 9 is described with reference to FIG. 10. FIG. 10 is a view illustrating an SAR event according to various embodiments.

According to various embodiments, an electronic device 101 (e.g., at least one of the processor 120, the first communication processor 212, the second communication processor 214, or the integrated communication processor 260) may determine to transmit an RF signal through a first RF path in operation 901. In operation 903, the electronic device 101 may identify the state of the housing. Since the identification of the state of the housing has been described above, the description herein is not repeated. The electronic device 101 may identify an SAR event in operation 905. For example, referring to FIG. 10, any one of a first event 922 and a second event 923 may be detected with respect to the first antenna group 921. For example, the first event 922 may be a head SAR event, which may be an event in which an RF signal is transmitted through an antenna close to the head of the user. For example, the first event 922 may be detected based on a sensing result of a proximity sensor disposed close to the position of the antenna close to the head of the user, but is not limited thereto. For example, the second event 923 may be a non-head SAR event, which may be an event in which an RF signal is transmitted through an antenna adjacent to another body part (e.g., a hand) other than the head of the user. For example, the second event 923 may be detected based on a sensing result of a proximity sensor disposed at a point other than the antenna adjacent to the head, but is not limited thereto. In the above description, the event may indicate the type of the body part contacting the electronic device 101, but this is not limited thereto.

According to various embodiments, whether to back off the maximum transmission power limit of the RF path associated with the first event 922 may be determined according to whether the sum of the accumulated SAR associated with the first event 922 and the SAR predicted at the current and/or future time exceeds the threshold SAR. Further, independently from the first event 922, whether to back off the maximum transmission power limit of the RF path associated with the second event 923 may be determined according to whether the sum of the accumulated SAR associated with the second event 923 and the SAR predicted at the current and/or future time exceeds the threshold SAR. For example, the electronic device 101 may independently manage the accumulated SAR and/or predicted SAR associated with the first event 922 and the accumulated SAR and/or predicted SAR associated with the second event 923 even within the first antenna group 921. For example, the electronic device 101 may independently manage the accumulated SAR and/or predicted SAR associated with the first event 932 and the accumulated SAR and/or predicted SAR associated with the second event 933 even within the second antenna group 931.

According to various embodiments, in operation 907, the electronic device 101 may identify the maximum transmission power limit corresponding to the first RF path, based on the antenna group determined according to the state of the housing in which the accumulated SAR for the first RF path is identified and whether the maximum transmission power limit backoff condition corresponding to the SAR event is met. In operation 909, the electronic device 101 may control at least one RF circuit to transmit an RF signal based on the transmission power set based on the maximum transmission power limit. For example, in association with the example of FIG. 10, the electronic device 101 assumes that the antenna group corresponding to the first RF path is determined as the first antenna group 921 and the first event 922 (e.g., a head SAR event) is detected according to the housing state. The electronic device 101 may determine whether to back off the maximum transmission power limit, based on whether the sum of the accumulated SAR and the predicted SAR generated while the first event 922 (e.g., the head SAR event) is detected in the first antenna group 921 exceeds the threshold SAR. If the antenna group corresponding to the first RF path is determined as the first antenna group 921 according to the housing state and the second event 923 (e.g., a non-head SAR event) is detected, the electronic device 101 may determine whether to back off the maximum transmission power limit, based on whether the sum of the accumulated SAR and the predicted SAR generated while the second event 923 (e.g., a non-head SAR event) is detected in the first antenna group 921 exceeds the threshold SAR. In this case, the accumulated SAR generated while the first event 923 is detected in one time table may be excluded from the sum. As described above, the electronic device 101 according to various embodiments may determine whether to back off the maximum transmission power limit considering the antenna group and the event together, but this is exemplary. As described in another embodiment, the electronic device 101 may determine whether to back off the maximum transmission power limit, considering only the antenna group. Alternatively, in another embodiment, the electronic device 101 may determine whether to back off the maximum transmission power limit considering only the event. For example, the antenna group may be represented by being replaced with an event. For example, the first antenna and the second antenna included in the first antenna group may be replaced with the first antenna and the second antenna corresponding to the first event (e.g., a head SAR event).

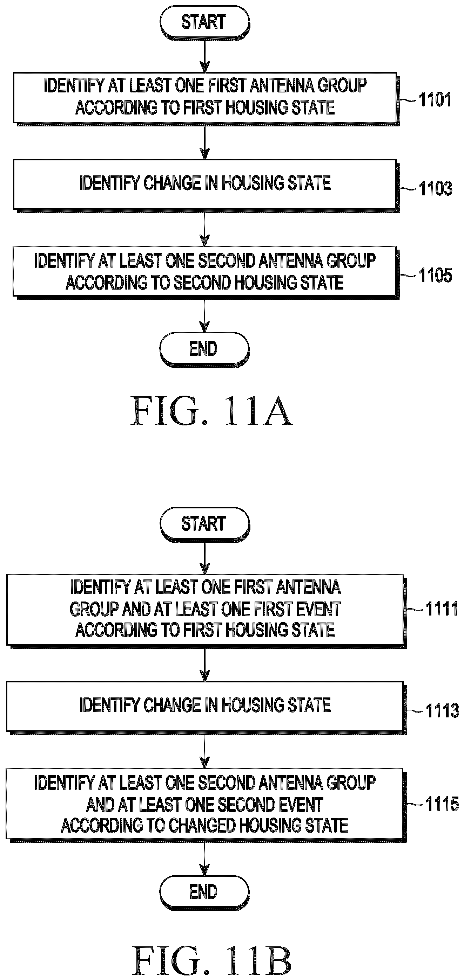

FIG. 11A is a flowchart illustrating an operation method of an electronic device according to various embodiments;

According to an embodiment, the electronic device 101 (e.g., at least one of the processor 120, the first communication processor 212, the second communication processor 214, or the integrated communication processor 260) may identify at least one first antenna group depending on the first housing state in operation 1101. The first housing state may mean, e.g., a state in which an angle between the first housing 601 and the second housing 602 is a first angle (or is included in a first range). The electronic device 101 may identify at least one first antenna group corresponding to the first housing state. In the first housing state, there may be a plurality of first antenna groups. For example, when the shortest distance between an antenna included in any one antenna group and an antenna included in another antenna group in the first housing state is equal to or larger than a threshold distance, the electronic device 101 may set a plurality of antenna groups in the first housing state. The electronic device 101 may determine whether to back off the maximum transmission power limit for each of the at least one first antenna group.

According to various embodiments, the electronic device 101 may identify a change in the housing state in operation 1103. In operation 1105, the electronic device 101 may identify at least one second antenna group according to the second housing state. The second housing state may mean, e.g., a state in which the angle between the first housing 601 and the second housing 602 is a second angle (or is included in a second range). The electronic device 101 may identify at least one second antenna group corresponding to the second housing state. In one example, the electronic device 101 may update an antenna (or an RF path) included in each of the antenna groups according to a change in the housing state. Alternatively, in another example, when it is identified that the housing is changed, the electronic device 101 may newly define an antenna group, but the configuration method of the antenna group is not limited. In the second housing state, there may be a plurality of second antenna groups. For example, when the shortest distance between an antenna included in any one antenna group and an antenna included in another antenna group in the second housing state is equal to or larger than the threshold distance, the electronic device 101 may set a plurality of antenna groups in the second housing state. For example, when the electronic device 101 is a foldable device, in the unfolded state, the electronic device 101 may configure antennas to be included in each of a plurality of antenna groups. Further, when the electronic device 101 is changed from the unfolded state to the half-folded state, the electronic device 101 may update antennas included in each of the plurality of antenna groups. Further, when the electronic device 101 is changed from the half-folded state to the fully folded state, the electronic device 101 may update to include all the antennas in one antenna group. The electronic device 101 may determine whether to back off the maximum transmission power limit for each of the at least one second antenna group. Each of the at least one second antenna group may take over the accumulated SAR of the at least one first antenna group and/or may newly update it.

FIG. 11B is a flowchart illustrating an operation method of an electronic device according to various embodiments.

According to an embodiment, the electronic device 101 (e.g., at least one of the processor 120, the first communication processor 212, the second communication processor 214, or the integrated communication processor 260) may identify at least one first antenna group and at least one first event depending on the first housing state in operation 1111. In operation 1113, the electronic device 101 may identify a change in the housing state. In operation 1115, the electronic device 101 may identify at least one second antenna group and at least one second event according to the changed housing state. For example, at least one event may be updated according to a change in the housing state. For example, the first RF path (or an antenna corresponding to the first RF path) may correspond to a head SAR event in the first housing state, and may correspond to a non-head SAR event in the second housing state. The electronic device 101 may update the event according to the change in the housing state, and may determine whether to back off the maximum transmission power limit for the antenna group and the event updated thereafter.

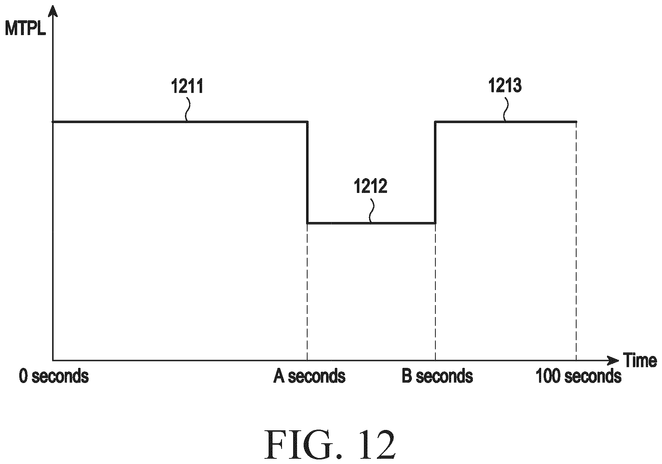

FIG. 12 is a view illustrating backoff of a maximum transmission power limit and restoration of the maximum transmission power limit according to various embodiments.

According to an embodiment, the electronic device 101 (e.g., at least one of the processor 120, the first communication processor 212, the second communication processor 214, or the integrated communication processor 260) may determine to transmit the first RF signal via the first RF path. For the first RF path, e.g., a first maximum transmission power limit 1211 may be set. A first accumulated SAR may be present for the first RF path. For example, it is assumed that the first RF path is included in the first antenna group in the first housing state. Although not shown, it is assumed that the second RF signal is being transmitted through the second RF path in the first antenna group, and thus there is a second accumulated SAR for the second RF path. The electronic device 101 may determine whether to back off the first maximum transmission power limit 1211 based on the SAR corresponding to the first RF path and the second RF path included in the first antenna group. For example, until A seconds, the electronic device 101 may maintain the first maximum transmission power limit 1211 without backing off, based on the sum of the first accumulated SAR corresponding to the first RF path, the predicted SAR corresponding to the first RF path, the second accumulated SAR corresponding to the second RF path, and the predicted SAR corresponding to the second RF path being less than or equal to the threshold SAR. Meanwhile, at A seconds, the electronic device 101 may back off the maximum transmission power limit to the second maximum transmission power limit 1212 based on the sum of the first accumulated SAR corresponding to the first RF path, the predicted SAR corresponding to the first RF path, the second accumulated SAR corresponding to the second RF path, and the predicted SAR corresponding to the second RF path exceeding the threshold SAR.

Meanwhile, at B seconds, the housing state of the electronic device 101 may be changed from the first housing state to the second housing state. For example, when the electronic device 101 is a foldable device, it may be changed from a folded state to an unfolded state. The electronic device 101 may change the antenna group including the first RF path from the first antenna group to the second antenna group, and may manage the second RF path to be included in the second antenna group. Accordingly, the electronic device 101 may determine whether to back off the maximum transmission power limit for the second antenna group. For example, the electronic device 101 may determine whether to back off the maximum transmission power limit, based on whether the sum of the first accumulated SAR corresponding to the first RF path and the predicted SAR corresponding to the first RF path exceeds the threshold SAR. Since the sum does not include the second accumulated SAR corresponding to the second RF path and the predicted SAR corresponding to the second RF path, the sum of the first accumulated SAR and the predicted SAR corresponding to the first RF path may be less than or equal to the threshold SAR. In this case, the electronic device 101 may determine not to back off the maximum transmission power limit corresponding to the first RF path, and may restore the maximum transmission power limit corresponding to the first RF path to the first maximum transmission power limit 1213. Alternatively, the average power limit (e.g., 30 dBm) corresponding to the second antenna group may be set to be higher than the average power limit (e.g., 19 dBm) corresponding to the first antenna group, and accordingly, the electronic device 101 may determine not to back off the maximum transmission power limit corresponding to the first RF path, and may restore the maximum transmission power limit corresponding to the first RF path to the first maximum transmission power limit 1213. As described above, the maximum transmission power limit may be avoided from being unnecessarily limited according to a change in the state of the housing. In particular, in the case of a foldable device, the user often performs a call after switching the housing to the unfolded state. In this case, the gap between the antennas disposed in the electronic device 101 may increase compared to the folded state of the housing, and thus the antennas are more likely to be included in different antenna groups. When transmitting RF signals based on different antenna groups, the electronic device 101 may not back off the maximum transmission power limit, thereby enabling stable communication.

Meanwhile, in another example, the electronic device 101 may be implemented to set the average power limit corresponding to the first RF path to the first value (e.g., 19 dBm) when the housing state is the first state (e.g., the folded state), and to set the average power limit corresponding to the first RF path to the second value (e.g., 30 dBm) when the housing state is the second state (e.g., the unfolded state). In the first housing state, the electronic device 101 may determine whether to back off the maximum transmission power limit of the first RF path, based on whether the sum of the first accumulated SAR and the predicted SAR corresponding to the first RF path exceeds the threshold SAR. Here, the threshold SAR may be a value (e.g., the product of the numbers of times in the first value X time table) set based on the first value (e.g., 19 dBm) and may be a relatively low value. Accordingly, at A seconds, the electronic device 101 may back off the maximum transmission power limit from the first maximum transmission power limit 1211 to the second maximum transmission power limit 1212, based on the sum of the first accumulated SAR and the predicted SAR corresponding to the first RF path exceeding the threshold SAR. Meanwhile, in the second housing state, the electronic device 101 may determine whether to back off the maximum transmission power limit of the first RF path, based on whether the sum of the first accumulated SAR and the predicted SAR corresponding to the first RF path exceeds the threshold SAR. Here, the threshold SAR may be a value (e.g., the product of the numbers of times in the second value X time table) set based on the second value (e.g., 30 dBm) and may be a relatively high value. Accordingly, the electronic device 101 may restore the maximum transmission power limit from the second maximum transmission power limit 1212 to the first maximum transmission power limit 1211 based on the sum of the first accumulated SAR and the predicted SAR corresponding to the first RF path being less than or equal to the threshold SAR at B seconds when the state of the housing is changed.

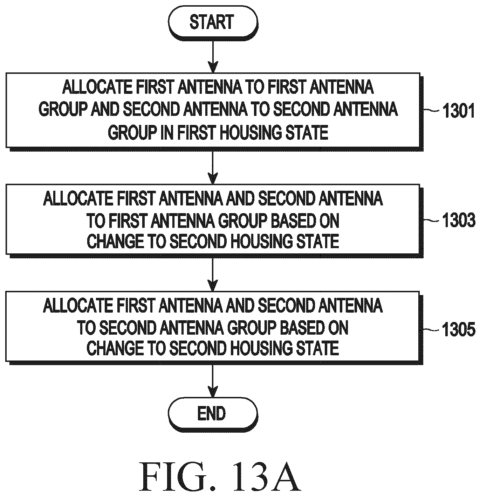

FIG. 13A is a flowchart illustrating an operation method of an electronic device according to various embodiments.

According to an embodiment, the electronic device 101 (e.g., at least one of the processor 120, the first communication processor 212, the second communication processor 214, or the integrated communication processor 260) may allocate the first antenna to the first antenna group and the second antenna to the second antenna group in the first housing state (e.g., the unfolded state) in operation 1301. In the first housing state, the distance between the first antenna and the second antenna may be larger than or equal to a threshold distance, and thus each of the first antenna and the second antenna may be included in a different antenna group. The electronic device 101 may independently manage whether to back off the maximum transmission power limit based on the SAR associated with the first antenna included in the first antenna group and whether to back off the maximum transmission power limit based on the SAR associated with the second antenna included in the second antenna group.

According to various embodiments, in operation 1303, the electronic device 101 may allocate the first antenna and the second antenna to the first antenna group, based on the state of the housing being changed from the first housing state to the second housing state (e.g., the folded state). Meanwhile, the change from the first housing state (e.g., the unfolded state) to the second housing state (e.g., the folded state) is merely an example, and it will be understood by one of ordinary skill in the art that, e.g., the change from the folded state to the unfolded state, the change from the unfolded state, the change from the unfolded state to the half-folded state, and the like are all possible, and the change in the state is not limited. Further, in operation 1305, the electronic device 101 may allocate the first antenna and the second antenna to the second antenna group, based on the state of the housing being changed from the first housing state to the second housing state. In the second housing state (e.g., the folded state), the distance between the first antenna and the second antenna may be less than the threshold distance, and thus the first antenna and the second antenna may be included in the same antenna groups, respectively. In the embodiment of FIG. 13A, the electronic device 101 may maintain the inclusion of the first antenna in the first antenna group, and may also include the first antenna in the second antenna group. The electronic device 101 may maintain the inclusion of the second antenna in the second antenna group, and may also include the second antenna in the first antenna group. The electronic device 101 may manage whether to back off at least one maximum transmission power limit considering both the SAR associated with the first antenna and the SAR associated with the second antenna included in the first antenna group. The electronic device 101 may manage whether to back off at least one maximum transmission power limit considering both the SAR associated with the first antenna and the SAR associated with the second antenna included in the second antenna group.

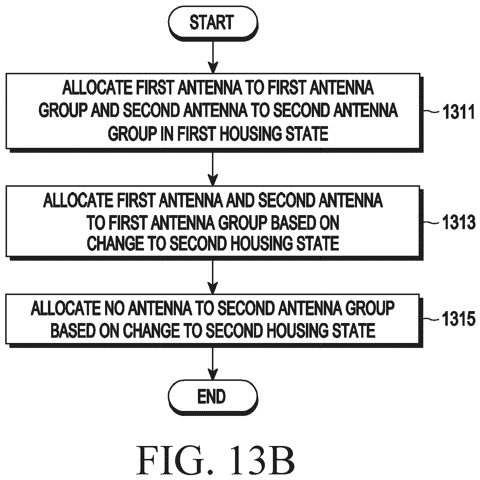

FIG. 13B is a flowchart illustrating an operation method of an electronic device according to various embodiments.

According to an embodiment, the electronic device 101 (e.g., at least one of the processor 120, the first communication processor 212, the second communication processor 214, or the integrated communication processor 260) may allocate the first antenna to the first antenna group and the second antenna to the second antenna group in the first housing state (e.g., the unfolded state) in operation 1311. In the first housing state, the distance between the first antenna and the second antenna may be larger than or equal to a threshold distance, and thus each of the first antenna and the second antenna may be included in a different antenna group. The electronic device 101 may independently manage whether to back off the maximum transmission power limit based on the SAR associated with the first antenna included in the first antenna group and whether to back off the maximum transmission power limit based on the SAR associated with the second antenna included in the second antenna group.

According to various embodiments, in operation 1313, the electronic device 101 may allocate the first antenna and the second antenna to the first antenna group, based on the state of the housing being changed from the first housing state to the second housing state (e.g., the folded state). Further, in operation 1315, the electronic device 101 may not allocate an antenna to the second antenna group based on the state of the housing being changed from the first housing state to the second housing state. In the second housing state (e.g., the folded state), the distance between the first antenna and the second antenna may be less than the threshold distance, and thus the first antenna and the second antenna may be included in the same antenna groups, respectively. In the embodiment of FIG. 13B, the electronic device 101 may maintain the inclusion of the first antenna in the first antenna group, may include the second antenna in the first antenna group, and may exclude the second antenna from the second antenna group. The electronic device 101 may manage whether to back off at least one maximum transmission power limit considering both the SAR associated with the first antenna and the SAR associated with the second antenna included in the first antenna group. In one example, when the state of the housing is changed from the second housing state (folded state) to the first housing state (unfolded state), the second antenna may be managed to be newly included in the second antenna group. In this case, there is no accumulated SAR for the second antenna group, and accordingly, the backoff of the maximum transmission power limit may not be performed for the second antenna included in the second antenna group. In this case, it may be managed that there is no accumulated SAR for the second antenna group. Meanwhile, for the first antenna group, backoff of the maximum transmission power limit for the first antenna may be performed based on the accumulated SAR. Meanwhile, in another example, the electronic device 101 may determine whether to back off the maximum transmission power limit for the second antenna considering the accumulated SAR associated with the second antenna newly included in the second antenna group. For example, the electronic device 101 may determine whether to back off the maximum transmission power limit for the second antenna, based on whether the sum of the accumulated SAR and the predicted SAR corresponding to the second antenna exceeds the threshold SAR. In this case, the existing accumulated SAR for the second antenna group may be managed to succeed.

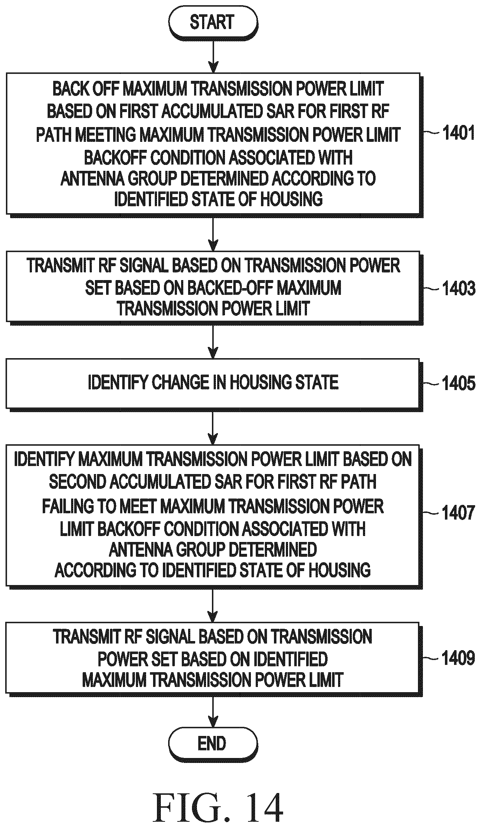

FIG. 14 is a flowchart illustrating an operation method of an electronic device according to various embodiments.

According to various embodiments, in operation 1401, the electronic device 101 (e.g., at least one of the processor 120, the first communication processor 212, the second communication processor 214, or the integrated communication processor 260) may back off the maximum transmission power limit, based on meeting the maximum transmission power limit backoff condition associated with the antenna group determined according to the state of the housing in which the first accumulated SAR for the first RF path is identified. For example, depending on the housing state, another RF path may be included in the antenna group corresponding to the first RF path. For example, when the sum of the first accumulated SAR and the predicted SAR corresponding to the first RF path and the sum of the accumulated SAR of another RF path and the predicted SAR of the other RF path exceed the threshold SAR, the electronic device 101 may back off the maximum transmission power limit. In operation 1403, the electronic device 101 may control at least one RF circuit to transmit an RF signal based on transmission power set based on the backed-off maximum transmission power limit. In operation 1405, the electronic device 101 may identify a change in the housing state. In operation 1407, the electronic device 101 may identify the maximum transmission power limit, based on failure to meet that the maximum transmission power limit backoff condition associated with the antenna group determined according to the state of the housing in which the second accumulated SAR for the first RF path is identified. Here, the second cumulative SAR is, e.g., an accumulated SAR corresponding to the first RF path, and may have a different time interval and/or a different value from the first cumulative SAR over time. For example, depending on the housing state, another RF path (or another activated RF path) may not be included in the antenna group corresponding to the first RF path. For example, when the sum of the first accumulated SAR and the predicted SAR corresponding to the first RF path is less than or equal to the threshold SAR, the electronic device 101 may not back off the maximum transmission power limit. In operation 1409, the electronic device 101 may control at least one RF circuit to transmit an RF signal based on transmission power set based on the identified maximum transmission power limit. As described above, even when the housing state is changed, the electronic device 101 may determine whether to back off considering the accumulated SAR (e.g., the second accumulated SAR) of the first RF path.

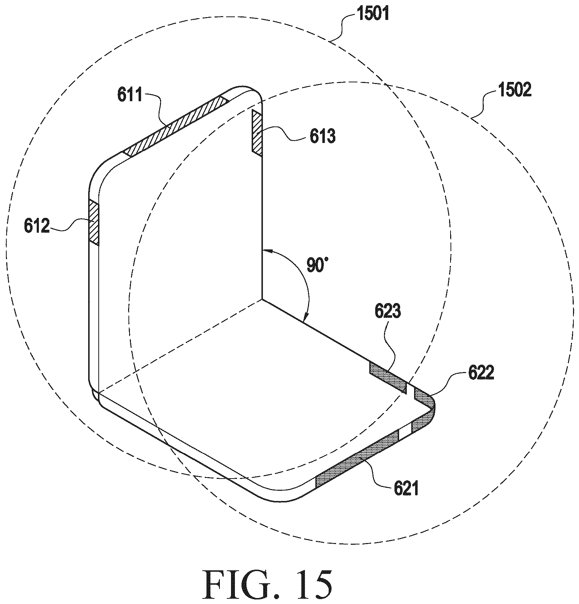

FIG. 15 is a view illustrating an antenna group in a half-folded state according to various embodiments.

According to various embodiments, the electronic device 101 (e.g., at least one of the processor 120, the first communication processor 212, the second communication processor 214, or the integrated communication processor 260) may identify that the state of the housing is a half-folded state. For example, when the angle between the first housing 601 and the second housing 602 is 90 degrees, the state of the housing may be the half-folded state, but the size of the angle is not limited. The electronic device 101 may set the first antenna group 1501 and the second antenna group 1502 in the half-folded state of the housing. The first antenna group 1501 may include antennas 611, 612, 613, and 623. For example, when it is determined that an RF signal is to be transmitted through the antenna 611, the electronic device 101 may determine whether to back off the maximum transmission power limit corresponding to the antenna 611, based on whether the sum of the accumulated SAR and the predicted SAR of the antennas 611, 612, 613, and 623 included in the first antenna group 1501 exceeds the threshold SAR. The second antenna group 1502 may include antennas 621, 622, and 623. For example, when it is determined that an RF signal is to be transmitted through the antenna 621, the electronic device 101 may determine whether to back off the maximum transmission power limit corresponding to the antenna 611, based on whether the sum of the accumulated SAR and the predicted SAR of the antennas 621, 622, and 623 included in the second antenna group 1502 exceeds the threshold SAR. Here, the antenna 623 may be included in both the first antenna group 1501 and the second antenna group 1502, which may be referred to as a shared antenna. For example, when it is determined that an RF signal is to be transmitted through the antenna 623, it may be determined whether to back off the maximum transmission power limit corresponding to the antenna 611, based on whether the sum of the accumulated SAR and the predicted SAR of the antennas 611, 612, 613, 621, 622, and 623 included in the first antenna group 1501 and the second antenna group 1502 exceeds the threshold SAR.

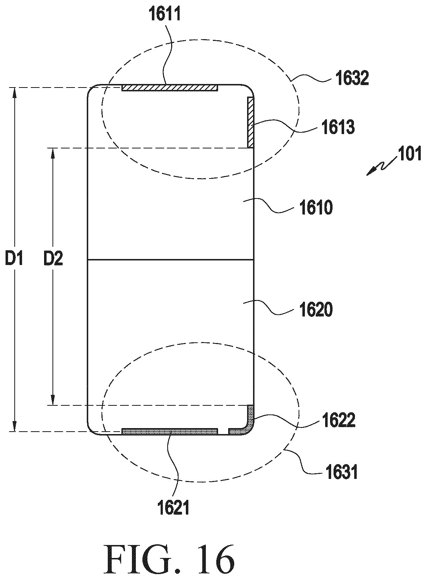

FIG. 16 is a view illustrating a distance between antennas of an electronic device according to various embodiments.

According to various embodiments, the antennas 1611 and 1613 may be disposed in the first housing 1610 of the electronic device 101, and the antennas 1621 and 1622 may be disposed in the second housing 1620. For example, it is assumed that the distance between the antenna 1611 and the antenna 1621 is D1, and the distance between the antenna 1613 and the antenna 1622 is D2. In one example, the electronic device 101 may determine to transmit a first RF signal through the antenna 1611 and may determine to transmit a second RF signal through the antenna 1621. When the first average SAR limit is set for the first RF signal and the second average SAR limit is set for the second RF signal, the sum SAR of the first average SAR limit and the second average SAR limit may be a first value (e.g., 3.2 W/Kg in Table 3). In this case, 1 may be equal to or larger than 143 mm, which is the minimum separation distance corresponding to the first value (e.g., 3.2 W/Kg in Table 3). Accordingly, the antenna 1611 and the antenna 1621 may be included in different antenna groups 1632 and 1631, respectively, and the electronic device 101 may independently determine whether to back off for the antennas 1611 and 1621.

Meanwhile, the electronic device 101 may determine to transmit the first RF signal through the antenna 1613 and the second RF signal through the antenna 1622. If the first average SAR limit is set for the first RF signal and the second average SAR limit is set for the second RF signal, the sum SAR of the first average SAR limit and the second average SAR limit may be a first value (e.g., 3.2 W/Kg in Table 3). In this case, D2 may be less than 143 mm, which is the minimum separation distance corresponding to the first value (e.g., 3.2 W/Kg in Table 3). In this case, the antennas 1613 and 1622 may be included in the same antenna group and backoff is likely to be performed relatively early. The electronic device 101 may adjust the sum SAR by adjusting the first average SAR limit for the first RF signal and/or the second average SAR limit for the second RF signal. For example, when the electronic device 101 adjusts the sum SAR to the second value (e.g., 2.8 W/Kg in Table 3), the minimum separation distance corresponding to the second value (e.g., 2.8 W/Kg in Table 3) may be 117 mm. D2 may be 117 mm or more. In this case, the antenna 1613 and the antenna 1622 may be included in different antenna groups 1632 and 1631, respectively, and the electronic device 101 may independently determine whether to back off for the antennas 1613 and 1622. As described above, when antennas to transmit RF signals are determined, the electronic device 101 according to various embodiments may adjust at least one of the average SAR limit corresponding to each of the antennas based on the distance between the antennas, and thus the antennas may be included in different antenna groups.

Meanwhile, in FIG. 16, the average SAR limit adjustment based on the distance between the antennas 1611 and 1621 in the unfolded state has been described, but this is exemplary, and the electronic device 101 may perform the average SAR limit adjustment based on a change in the distance between the antennas 1611 and 1621 according to a change in the housing state. For example, the distance between the antennas 1611 and 1621 which is D2 in the unfolded state may be changed to a value smaller than D2 as the angle between the housings 1610 and 1620 is changed. The electronic device 101 may determine a sum SAR for determining the antennas 1611 and 1621 as included in different antenna groups, and may determine an average antenna limit for each of the antennas 1611 and 1621 that does not meet the determined sum SAR. As described above, the electronic device 101 may determine the average antenna limit so that the antennas are included in different antenna groups according to the housing state.

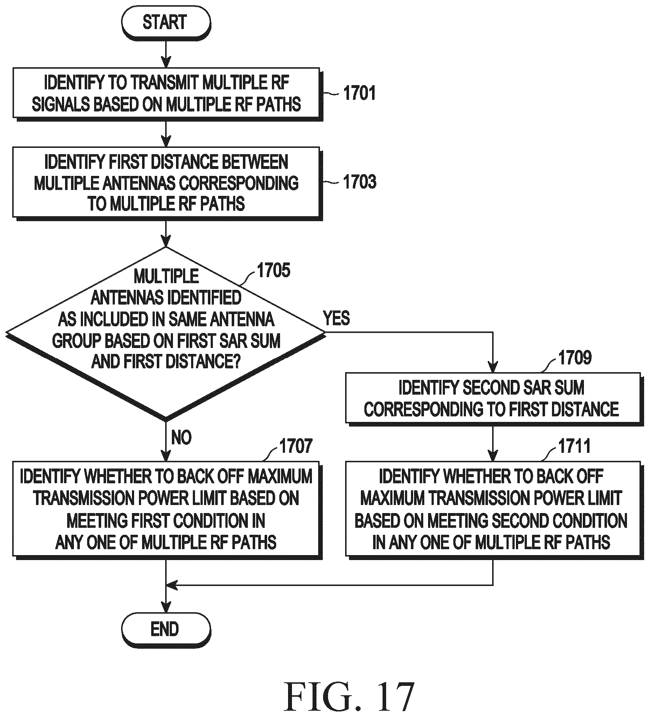

FIG. 17 is a flowchart illustrating a method for operating an electronic device according to various embodiments.

According to an embodiment, the electronic device 101 (e.g., at least one of the processor 120, the first communication processor 212, the second communication processor 214, or the integrated communication processor 260) may identify to transmit a plurality of RF signals based on a plurality of RF paths in operation 1701. In operation 1703, the electronic device 101 may identify a first distance between a plurality of antennas corresponding to a plurality of RF paths. In operation 1705, it may be identified whether the plurality of antennas are identified as included in the same antenna group, based on the first SAR sum and the first distance. Here, the first SAR sum may be a sum of average SAR limits corresponding to the plurality of antennas, respectively, but is not limited thereto. If the plurality of antennas are not identified as included in the same antenna group (No in 1705), the electronic device 101 may identify whether to back off the maximum transmission power limit, based on whether the first condition is met, in any one RF path among the plurality of RF paths in operation 1707. Here, the first condition may be set corresponding to, e.g., an average SAR limit corresponding to each of the plurality of antennas based on the first SAR sum. If the plurality of antennas are identified as included in the same antenna group (Yes in 1705), the electronic device 101 may identify the sum of the second SARs corresponding to the first distance in operation 1709. For example, the electronic device 101 may identify the second SAR sum, which is the sum of SARI and SAR2 when R in Equation 1 is a first distance. The electronic device 101 may identify the second condition corresponding to the average SAR limit corresponding to each of the plurality of antennas based on the second SAR sum. In operation 1711, the electronic device 101 may identify whether to back off the maximum transmission power limit, based on whether the second condition is met, in any one RF path among the plurality of RF paths. As described above, when the currently set sum SAR and the distance between the antennas do not meet Equation 1, the electronic device 101 may adjust the sum SAR to meet Equation 1. Accordingly, since the antennas may be included in different antenna groups, the backoff of the maximum transmission power limit may be delayed or may not be performed. There is a possibility that the backoff caused by the inclusion of the antennas in the same antenna group may be performed earlier than the backoff caused by the reduction in the average SAR limit for each antenna due to the reduction in the sum SAR. Accordingly, even if the average SAR limit for each antenna is reduced, the electronic device 101 may adjust the sum SAR so that the antennas are included in different antenna groups.

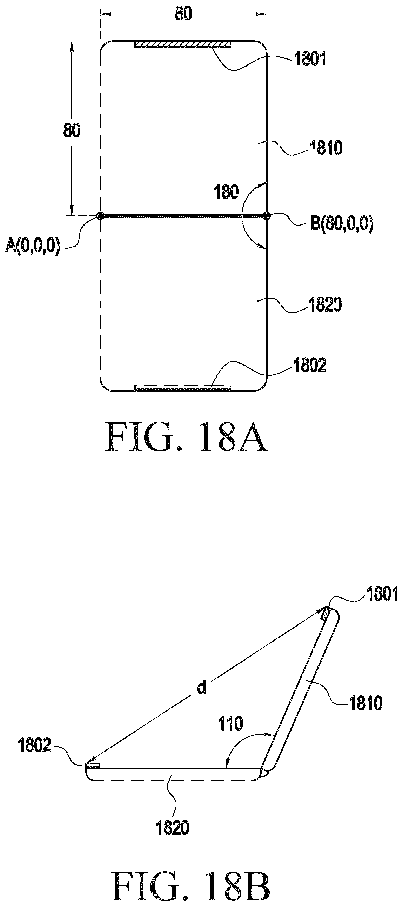

FIGS. 18A and 18B are a plan view and a side view illustrating an electronic device according to various embodiments.

According to an embodiment, the coordinates of a first point A of the electronic device 101 may be set to (0,0,0) and the coordinates of a second point B may be set to (80,0,0). The horizontal length of the first housing 1810 of the electronic device 101 may be 80, and the vertical length may be 80. As the coordinates of the first point A are the origin, coordinates of each of the antennas 1801 and 1802 may be set. For example, the coordinates of the antenna 1801 may be coordinates of the center point of the antenna 1801, and may be (40, 80, 0) in one example. For example, the coordinates of the antenna 1802 may be coordinates of the center point of the antenna 1802, and may be (40, -80, 0) in one example. The electronic device 101 may reset the coordinates of the antennas 1801 and 1802 based on the angle between the housings 1810 and 1820. For example, as illustrated in FIG. 18B, when the angle between the first housing 1810 and the second housing 1820 is 110 degrees, the coordinates of the antenna 1802 may be fixed to (40, -80, 0). The electronic device 101 may identify the coordinates of the antenna 1801 as (40, 27.4, 75.2). The electronic device 101 may identify the distance d between both the coordinates as 133. For example, when the sum SAR based on the average SAR limit allocated to both antennas 1801 and 1802 is 3.2 W/Kg, the minimum separation distance may be 143 according to Table 3. When the angle between the first housing 1810 and the second housing 1820 is 110 degrees, because the distance d between the antennas 1801 and 1802 is shorter than the minimum separation distance 143, the electronic device 101 may allocate the antennas 1801 and 1802 to the same antenna group. Alternatively, the electronic device 101 may identify the sum of SARs corresponding to 133, which is the distance d between the antennas 1801 and 1802, based on Equation 1, and may allocate the antennas 1801 and 1802 to different antenna groups as the average SAR limit for each of the antennas 1801 and 1802 is set according to the sum of SARs. For example, the SAR sum corresponding to 133 which is the distance d between the antennas 1801 and 1802 may be 3.04 according to Equation 1, and the electronic device 101 may set the average SAR limit for each of the antennas 1801 and 1802 based on the SAR sum of 3.04.

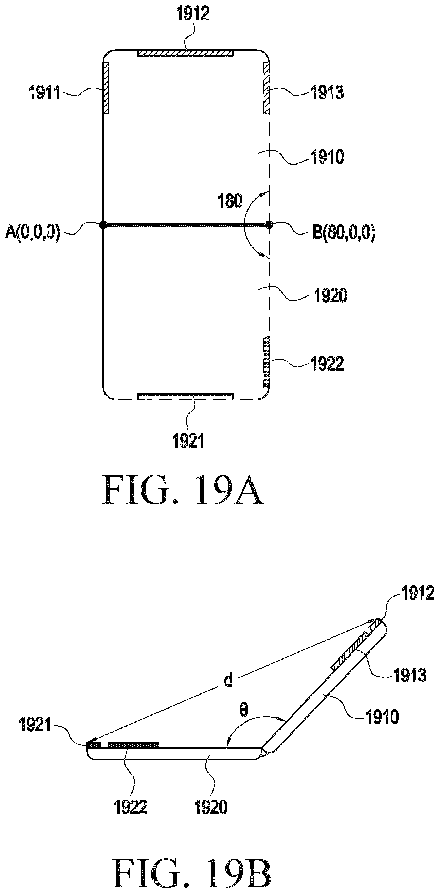

FIGS. 19A and 19B are a plan view and a side view illustrating an electronic device according to various embodiments.

According to an embodiment, the coordinates of a first point A of the electronic device 101 may be set to (0,0,0) and the coordinates of a second point B may be set to (80,0,0). The horizontal length of the first housing 1910 and the second housing 1920 of the electronic device 101 may be 80, and the vertical length may be 80. As the coordinates of the first point A are the origin, coordinates of the antennas 1911, 1912, 1913, 1921, and 1922 may be set. For example, in the unfolded state, the coordinates of the antenna 1911 may be (0,60,0), the coordinates of the antenna 1912 may be (40,80,0), the coordinates of the antenna 1913 may be (80,72,0), the coordinates of the antenna 1921 may be (40,-80,0), and the coordinates of the antenna 1922 may be (80,-72,0). When the electronic device 101 sets 2TX, the sum SAR for 2TX may be set to 3.2 W/Kg, and the minimum separation distance corresponding to the SAR sum according to Table 3 may be 143. For example, referring to FIG. 19B, when the angle between the first housing 1810 and the second housing 1820 is 130 degrees, the coordinates of the antenna 1911 may be (0,38.6,46.0), the coordinates of the antenna 1912 may be (40,51.4,61.3), the coordinates of the antenna 1913 may be (80,46.2,55.2), the coordinates of the antenna 1921 may be (40,-80,0), and the coordinates of the antenna 1922 may be (80,-72,0). In this case, the distance d between the antenna 1912 and the antenna 1921 may be 144, and may be larger than the minimum separation distance 143. Accordingly, the antenna 1912 and the antenna 1921 may be included in different antenna groups. Meanwhile, the antenna 1913 may be set as a shared antenna. Meanwhile, an SAR sum (e.g., 3W/Kg) corresponding to 130, which is the distance between the antenna 1913 and the antenna 1912, may be set so that the antenna 1913 and the antenna 1912 are also included in different antenna groups.

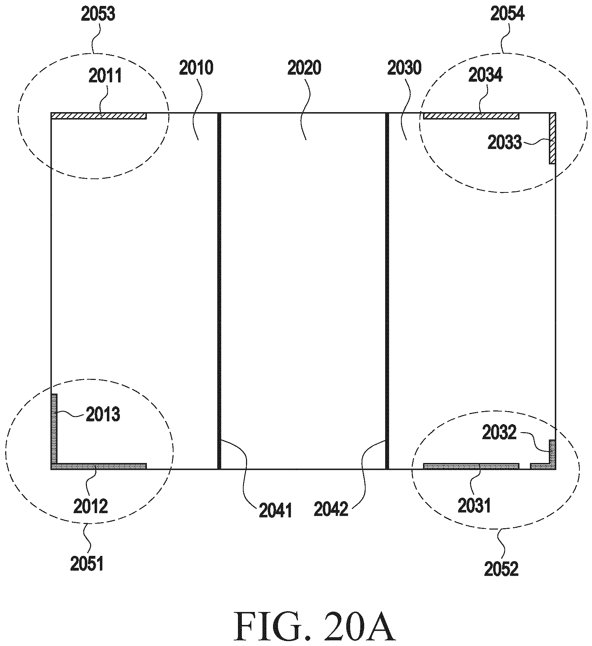

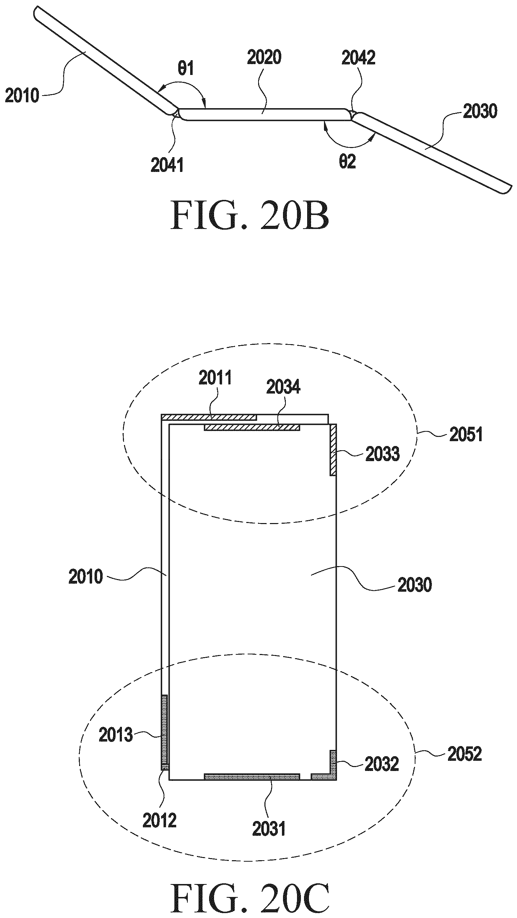

FIG. 20A is a view illustrating an electronic device foldable multiple times according to various embodiments. FIG. 20B is a side view illustrating an electronic device foldable multiple times according to various embodiments. FIG. 20C illustrates a state in which an electronic device foldable multiple times is folded multiple times according to various embodiments.

According to various embodiments, the electronic device 101 may include a first housing 2010, a second housing 2020, a third housing 2030, a first hinge structure 2041, and a second hinge structure 2042. The angle between the first housing 2010 and the second housing 2020 may be changed based on the rotation of the first hinge structure 2041. The angle between the second housing 2020 and the third housing 2030 may be changed based on the rotation of the second hinge structure 2042. For example, referring to FIG. 20B, the first hinge structure 2041 may rotate so that the angle $\theta_1$ between the first housing 2010 and the second housing 2020 is changed to allow the first housing 2010 to be positioned relatively higher with respect to the second housing 2020. Further, the second hinge structure 2042 may rotate so that the angle $\theta_2$ between the second housing 2020 and the third housing 2030 is changed to allow the third housing 2030 is positioned relatively lower with respect to the second housing 2020. Referring back to FIG. 20A, in the fully unfolded state (e.g., the state in which the angle $\theta_1$ between the first housing 2010 and the second housing 2020 is substantially 180 degrees and the angle $\theta_2$ between the second housing 2020 and the third housing 2030 is substantially 180 degrees), the electronic device 101 may set coordinates of each of the antennas 2011, 2012, 2013, 2031, 2032, 2033, and 2034. The electronic device 101 may identify distances between two antennas. Accordingly, the electronic device 101 may allocate the antenna 2012 and the antenna 2013 to the first antenna group 2051, may allocate the antenna 2031 and the antenna 2032 to the second antenna group 2052, may allocate the antenna 2011 to the third antenna group 2053, and may allocate the antenna 2033 and the antenna 2034 to the fourth antenna group 2054. As described above, the electronic device 101 may independently determine whether to back off the maximum transmission power limit for each antenna group.

Meanwhile, the electronic device 101 may reset the coordinates of each of the antennas 2011, 2012, 2013, 2031, 2032, 2033, and 2034, based on a change in the angle $\theta_1$ between the first housing 2010 and the second housing 2020 and/or a change in the angle $\theta_2$ between the second housing 2020 and the third housing 2030, and may identify the distance between the two antennas based on the reset coordinates. For example, as illustrated in FIG. 20C, a state in

which the angle $\theta_1$ between the first housing 2010 and the second housing 2020 is substantially 0 degrees and the angle $\theta_2$ between the second housing 2020 and the third housing 2030 is substantially 0 degrees may be referred to as a folded state. In the folded state, the electronic device 101 may reset coordinates of each of the antennas 2011, 2012, 2013, 2031, 2032, 2033, and 2034. The electronic device 101 may identify the distance between the antennas based on the reset coordinates. In the folded state, the electronic device 101 may allocate the antennas 2011, 2034, and 2033 to one antenna group 2051, and may allocate the antennas 2012, 2013, 2031, and 2032 to another antenna group 2052. The electronic device 101 may independently determine whether to back off the maximum transmission power limit for each antenna group.

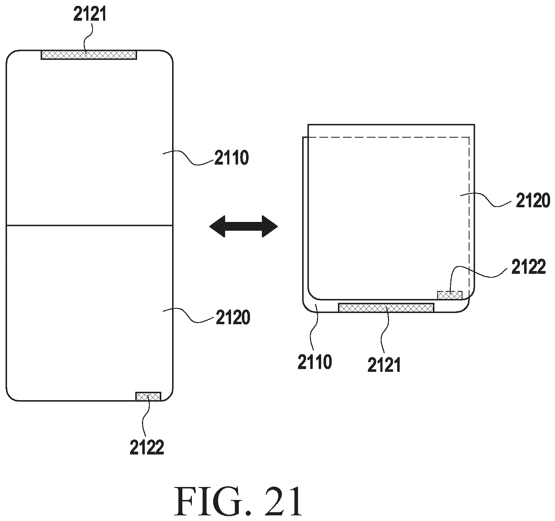

FIG. 21 is a view illustrating an electronic device according to various embodiments.

According to various embodiments, the electronic device 101 may include a first housing 2110 and a second housing 2120. A receiver (or speaker) may be disposed in the first housing 2110. The second housing 2120 may include a grip sensor 2122. For example, in the unfolded state, the distance between the receiver 2121 and the grip sensor 2122 of the electronic device 101 may be relatively large. When the user grips the electronic device 101 in the unfolded state, the grip sensor 2122 may detect the grip by the user. When the grip is sensed by the grip sensor 2122, the electronic device 101 may identify that a non-head SAR event has occurred. For example, based on the distance between the grip sensor 2122 and the user's head being relatively far, sensing of the proximity (or contact) by the grip sensor 2122 in the unfolded state may be identified as a non-head SAR event. Meanwhile, in the folded state, the distance between the receiver 2121 and the grip sensor 2122 may be relatively small. When the grip is sensed by the grip sensor 2122 in the folded state, the electronic device 101 may identify that the head-SAR event has occurred. For example, based on the relatively small distance between the grip sensor 2122 and the user's head, sensing of the proximity (or contact) by the grip sensor 2122 in the folded state may be identified as a head SAR event. Alternatively, the electronic device 101 may identify that both the head-SAR event and the non-head SAR event have occurred. Meanwhile, in another embodiment, when the grip by the grip sensor 2122 in the unfolded state is sensed, the electronic device 101 may identify that the head SAR event has occurred, and when the grip by the grip sensor 2122 in the folded state is sensed, the electronic device 101 may identify that the non-head SAR event has occurred. For example, in the folded state of the electronic device 101, the electronic device 101 may have a form-factor in which a call is not possible, and in this case, it may be identified that a non-head SAR event has occurred based on grip sensing in the folded state. In another example, the electronic device 101 may include a grip sensor 2122 (or a proximity sensor) disposed at a position where the user's head approaches during a call. In this case, the electronic device 101 may be configured to identify that a head-SAR event has occurred, based on grip sensing (or proximity sensing) of the grip sensor 2122 (or a proximity sensor). In another example, the electronic device 101 may identify whether a head SAR event or a non-head SAR event has occurred, based on whether the receiver 2121 operates. As described above, the electronic device 101 may not only dynamically change the antenna group according to the state of the housing, but also dynamically change the event according to the sensing result of the grip sensor 2122.

According to various embodiments, an electronic device (e.g., the electronic device 101) may comprise at least one housing (e.g., at least one of the first housing 601, the second housing 602, the first housing 1610, the second housing 1620, the first housing 1810, the second housing 1820, the first housing 1910, the second housing 1920, the first housing 2010, the second housing 2020, the third housing 2030, the first housing 2110, or the second housing 2120), a plurality of antennas (e.g., at least one of the first antenna module 242, the second antenna module 244, the third antenna module 246, the antennas 248, the antennas 521, 522, 523, and 524, the antennas 611, 612, 613, 621, 622, and 623, the antennas 1611, 1613, 1621, and 1622, the antennas 1801 and 1802, the antennas 1911, 1912, 1913, 1921, and 1922, or the antennas 2011, 2012, 2013, 2031, 2032, 2033, and 2034), at least one RF circuit (e.g., at least one of the first RFIC 222, the second RFIC 224, the third RFIC 226, the fourth RFIC 228, the first RFFE 232, the second RFFE 234, the third RFFE 236, the RFIC 503, the first RFFE 505, or the second RFFE 507), and at least one processor (e.g., at least one of the processor 120, the first communication processor 212, the second communication processor 214, the integrated communication processor 260, or the communication processor 501). The at least one processor may be configured to determine to transmit an RF signal through a first RF path corresponding to a first antenna among the plurality of antennas, identify a state of the at least one housing, identify a maximum transmission power limit corresponding to the first RF path based on whether an accumulated SAR for the first RF path meets a maximum transmission power limit backoff condition associated with an antenna group, wherein the antenna group is determined according to the state of the at least one housing, and control the at least one RF circuit to transmit the RF signal based on transmission power set based on the maximum transmission power limit.

According to various embodiments, the at least one processor may be configured to, as at least part of identifying the maximum transmission power limit corresponding to the first RF path, based on whether the accumulated SAR for the first RF path meets the maximum transmission power limit backoff condition associated with the antenna group determined according to the state of the at least one housing, identify whether to back off the maximum transmission power limit corresponding to the first RF path, based on whether a sum of the accumulated SAR for the first RF path and an SAR predicted to be generated for the first RF path exceeds a threshold SAR, based on identifying that a second antenna corresponding to a second RF path for transmitting a second RF signal among the plurality of antennas and the first antenna are included in different antenna groups, respectively.

According to various embodiments, the at least one processor may be further configured to identify that the first antenna and the second antenna are included in different antenna groups, respectively, based on the state of the at least one housing meeting a condition indicating that a distance between the first antenna and the second antenna is equal to or larger than a threshold distance.

According to various embodiments, the at least one housing may include a first housing and a second housing. The at least one processor may be further configured to obtain sensing data from at least one sensor for sensing a relative position between the first housing and the second housing and identify whether a condition indicating that a distance between the first antenna and the second antenna is the threshold distance or more is met based on the sensing data.

According to various embodiments, the at least one processor may be further configured to identify the threshold distance based on a sum of a first average SAR limit set for the first RF path and a second average SAR limit set for the second RF path.

According to various embodiments, the at least one processor may be configured to, as at least part of identifying whether to back off the maximum transmission power limit corresponding to the first RF path based on whether the sum of the accumulated SAR for the first RF path and the SAR predicted to be generated for the first RF path exceeds the threshold SAR, identify not to back off the maximum transmission power limit corresponding to the first RF path based on the sum of the accumulated SAR for the first RF path and the SAR predicted to be generated for the first RF path being the threshold SAR or less.

According to various embodiments, the at least one processor may be configured to identify that the first antenna and the second antenna are included in one antenna group, based on a change in the state of the at least one housing, based on the first antenna and the second antenna being included in one antenna group when the sum of the accumulated SAR for the first RF path, the accumulated SAR for the second RF path, the SAR predicted to be generated for the first RF path, and the SAR predicted to be generated for the second RF path at a time point after the change in the state of the at least one housing exceeds the threshold SAR, determine to back off the maximum transmission power limit corresponding to the first RF path and/or the maximum transmission power limit corresponding to the second RF path, when the sum of the accumulated SAR for the first RF path, the accumulated SAR for the second RF path, the SAR predicted to be generated for the first RF path, and the SAR predicted to be generated for the second RF path at a time point after the change in the state of the at least one housing is equal to or less than the threshold SAR refrain from backing off the maximum transmission power limit corresponding to the first RF path.

According to various embodiments, the at least one processor may be configured to, as at least part of identifying the maximum transmission power limit corresponding to the first RF path, based on whether the accumulated SAR for the first RF path meets the maximum transmission power limit backoff condition associated with the antenna group determined according to the state of the at least one housing, identify whether to back off the maximum transmission power limit corresponding to the first RF path and/or the maximum transmission power limit corresponding to the second RF path based on whether a sum of the accumulated SAR for the first RF path, an accumulated SAR for a second RF path, an SAR predicted to be generated for the first RF path, and an SAR predicted to be generated for the second RF path exceeds a threshold SAR, based on identifying that a second antenna corresponding to the second RF path for transmitting a second RF signal among the plurality of antennas and the first antenna are included in one antenna group.

According to various embodiments, the at least one processor may be further configured to identify that the first antenna and the second antenna are included in one antenna group, based on the state of the at least one housing meeting a condition indicating that a distance between the first antenna and the second antenna is less than a threshold distance.

According to various embodiments, the at least one housing may include a first housing and a second housing. The at least one processor may be further configured to obtain sensing data from at least one sensor for sensing a relative position between the first housing and the second housing and identify whether a condition indicating that a distance between the first antenna and the second antenna is less than the threshold distance is met based on the sensing data.

According to various embodiments, the at least one processor may be further configured to identify the threshold distance based on a sum of a first average SAR limit set for the first RF path and a second average SAR limit set for the second RF path.

According to various embodiments, the at least one processor may be configured to, as at least part of identifying whether to back off the maximum transmission power limit corresponding to the first RF path and/or the maximum transmission power limit corresponding to the second RF path, based on whether the sum of the accumulated SAR for the first RF path, the accumulated SAR for the second RF path, the SAR predicted to be generated for the first RF path, and the SAR predicted to be generated for the second RF path exceeds the threshold SAR, identify that the maximum transmission power limit corresponding to the first RF path is backed off, based on the sum of the accumulated SAR for the first RF path, the accumulated SAR for the second RF path, the SAR predicted to be generated for the first RF path, and the SAR predicted to be generated for the second RF path exceeding the threshold SAR.

According to various embodiments, the at least one processor may be configured to identify that the first antenna and the second antenna are included in different antenna groups, respectively, based on a change in the state of the at least one housing, based on the first antenna and the second antenna being included in the different antenna groups, respectively, when the sum of the accumulated SAR for the first RF path and the SAR predicted to be generated for the first RF path at a time point after the change in the state of the at least one housing exceeds the threshold SAR, determine to back off the maximum transmission power limit corresponding to the first RF path and, when the sum of the accumulated SAR for the first RF path and the SAR predicted to be generated for the first RF path at a time point after the change in the state of the at least one housing is equal to or less than the threshold SAR, refrain from backing off the maximum transmission power limit corresponding to the first RF path.

According to various embodiments, the at least one processor may be configured to, as at least part of identifying the maximum transmission power limit corresponding to the first RF path, based on whether the accumulated SAR for the first RF path meets the maximum transmission power limit backoff condition associated with the antenna group determined according to the state of the at least one housing, identify that a second antenna corresponding to a second RF path for transmitting a second RF signal among the plurality of antennas and the first antenna are included in one antenna group, based on a sum of a first average SAR limit set for the first RF path and a second average SAR limit set for the second RF path, adjust the first average SAR limit and/or the second average SAR limit so that the first antenna and the second antenna are included in different antenna groups, respectively, and identify whether to back off the maximum transmission power limit corresponding to the first RF path, based on whether a sum of the accumulated SAR for the first RF path and an SAR predicted to be generated for the first RF path exceeds a threshold SAR, based on the first antenna and the second antenna being included in the different antenna groups according to the adjustment of the first average SAR limit and/or the second average SAR limit.

According to various embodiments, the at least one processor may be further configured to identify a change in the state of the at least one housing, and reconfigure an antenna group including the first antenna, based on the change in the state of the at least one housing.

According to various embodiments, the at least one processor may be configured to, as at least part of identifying the maximum transmission power limit corresponding to the first RF path, based on whether the accumulated SAR for the first RF path meets the maximum transmission power limit backoff condition associated with the antenna group determined according to the state of the at least one housing, identify the maximum transmission power limit corresponding to the first RF path, based on whether the accumulated SAR for the first RF path meets a maximum transmission power limit backoff condition determined according to the antenna group and an event indicating a type of a body part contacting and the electronic device.

According to various embodiments, an electronic device may comprise at least one housing, a plurality of antennas disposed on the at least one housing, at least one RF circuit, and at least one processor. The at least one processor may be configured to determine to transmit RF signals through a first RF path corresponding to a first antenna among the plurality of antennas and a second RF path corresponding to a second antenna among the plurality of antennas, identify whether a distance between the first antenna and the second antenna is less than a threshold distance, the distance between the first antenna and the second antenna varying depending on a state of the at least one housing, based on the distance between the first antenna and the second antenna being less than the threshold distance identify whether to reduce at least one of a first maximum transmission power limit corresponding to the first RF path or a maximum transmission power limit corresponding to the second RF path, based on whether a sum of a first accumulated SAR corresponding to the first RF path and a second accumulated SAR corresponding to the second RF path meets a maximum transmission power limit backoff condition, and control the at least one RF circuit to transmit a first RF signal based on a first transmission power set based on the first maximum transmission power limit and to transmit a second RF signal based on a second transmission power set based on the second maximum transmission power limit.

According to various embodiments, the at least one processor may be configured to, based on a distance between the first antenna and the second antenna being a threshold distance or more, identify whether to reduce the first maximum transmission power limit according to whether the first accumulated SAR corresponding to the first RF path meets the maximum transmission power limit backoff condition, identify whether to reduce the second maximum transmission power limit according to whether the second accumulated SAR corresponding to the second RF path meets the maximum transmission power limit backoff condition, and control the at least one RF circuit to transmit a first RF signal based on a first transmission power set based on the first maximum transmission power limit and to transmit a second RF signal based on a second transmission power set based on the second maximum transmission power limit.

According to various embodiments, a method for operating an electronic device including at least one housing, a plurality of antennas disposed on the at least one housing, and at least one RF circuit may comprise determining to transmit an RF signal through a first RF path corresponding to a first antenna among the plurality of antennas, identifying a state of the at least one housing, identifying a maximum transmission power limit corresponding to the first RF path based on whether an accumulated SAR for the first RF path meets a maximum transmission power limit backoff condition associated with an antenna group determined according to the state of the at least one housing, and controlling the at least one RF circuit to transmit the RF signal based on transmission power set based on the maximum transmission power limit.

According to various embodiments, a method for operating an electronic device including at least one housing, a plurality of antennas disposed on the at least one housing, and at least one RF circuit may comprise determining to transmit RF signals through a first RF path corresponding to a first antenna among the plurality of antennas and a second RF path corresponding to a second antenna among the plurality of antennas, identifying whether a distance between the first antenna and the second antenna is less than a threshold distance, the distance between the first antenna and the second antenna varying depending on a state of the at least one housing, based on the distance between the first antenna and the second antenna being less than the threshold distance, identifying whether to reduce at least one of a first maximum transmission power limit corresponding to the first RF path or a maximum transmission power limit corresponding to the second RF path, based on whether a sum of a first accumulated SAR corresponding to the first RF path and a second accumulated SAR corresponding to the second RF path meets a maximum transmission power limit backoff condition, and controlling the at least one RF circuit to transmit a first RF signal based on a first transmission power set based on the first maximum transmission power limit and to transmit a second RF signal based on a second transmission power set based on the second maximum transmission power limit.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device, comprising:

   at least one housing;
   a plurality of antennas disposed on the at least one housing;
   at least one RF circuit; and
   at least one processor, wherein the at least one processor is configured to:
   determine to transmit an RF signal through a first RF path corresponding to a first antenna among the plurality of antennas;
   identify a state of the at least one housing;
   identify a maximum transmission power limit corresponding to the first RF path based on whether an accumulated SAR for the first RF path meets a maximum transmission power limit backoff condition associated with an antenna group, wherein the antenna group is determined according to the state of the at least one housing; and
   control the at least one RF circuit to transmit the RF signal based on transmission power set based on the maximum transmission power limit.

2. The electronic device of claim 1, wherein the at least one processor is configured to, as at least part of identifying the maximum transmission power limit corresponding to the first RF path, based on whether the accumulated SAR for the first RF path meets the maximum transmission power limit backoff condition associated with the antenna group determined according to the state of the at least one housing, identify whether to back off the maximum transmission power limit corresponding to the first RF path, based on whether a sum of the accumulated SAR for the first RF path and an SAR predicted to be generated for the first RF path exceeds a threshold SAR, based on identifying that a second antenna corresponding to a second RF path for transmitting a second RF signal among the plurality of antennas and the first antenna are included in different antenna groups, respectively.

3. The electronic device of claim 2, wherein the at least one processor is further configured to identify that the first antenna and the second antenna are included in different antenna groups, respectively, based on the state of the at least one housing meeting a condition indicating that a distance between the first antenna and the second antenna is equal to or larger than a threshold distance.

4. The electronic device of claim 2, wherein the at least one processor is configured to, as at least part of identifying whether to back off the maximum transmission power limit corresponding to the first RF path, based on whether the sum of the accumulated SAR for the first RF path and the SAR predicted to be generated for the first RF path exceeds the threshold SAR, identify that the maximum transmission power limit corresponding to the first RF path is not backed off, based on the sum of the accumulated SAR for the first RF path and the SAR predicted to be generated for the first RF path being less than or equal to the threshold SAR.

5. The electronic device of claim 4, wherein the at least one processor is further configured to:

   identify that the first antenna and the second antenna are included in one antenna group, based on a change in the state of the at least one housing;
   based on the first antenna and the second antenna being included in one antenna group:

      when the sum of the accumulated SAR for the first RF path, the accumulated SAR for the second RF path, the SAR predicted to be generated for the first RF path, and the SAR predicted to be generated for the second RF path at a time point after the change in the state of the at least one housing exceeds the threshold SAR: determine to back off the maximum transmission power limit corresponding to the first RF path and/or the maximum transmission power limit corresponding to the second RF path; and
      when the sum of the accumulated SAR for the first RF path, the accumulated SAR for the second RF path, the SAR predicted to be generated for the first RF path, and the SAR predicted to be generated for the second RF path at a time point after the change in the state of the at least one housing is equal to or less than the threshold SAR: refrain from backing off the maximum transmission power limit corresponding to the first RF path.

6. The electronic device of claim 1, wherein the at least one processor is configured to, as at least part of identifying the maximum transmission power limit corresponding to the first RF path, based on whether the accumulated SAR for the first RF path meets the maximum transmission power limit backoff condition associated with the antenna group determined according to the state of the at least one housing, identify whether to back off the maximum transmission power limit corresponding to the first RF path and/or the maximum transmission power limit corresponding to the second RF path based on whether a sum of the accumulated SAR for the first RF path, an accumulated SAR for a second RF path, an SAR predicted to be generated for the first RF path, and an SAR predicted to be generated for the second RF path exceeds a threshold SAR, based on identifying that a second antenna corresponding to the second RF path for transmitting a second RF signal among the plurality of antennas and the first antenna are included in one antenna group.

7. The electronic device of claim 6, wherein the at least one processor is further configured to identify that the first antenna and the second antenna are included in one antenna group, based on the state of the at least one housing meeting a condition indicating that a distance between the first antenna and the second antenna is less than a threshold distance.

8. The electronic device of claim 6, wherein the at least one processor is configured to, as at least part of identifying whether to back off the maximum transmission power limit corresponding to the first RF path and/or the maximum transmission power limit corresponding to the second RF path, based on whether the sum of the accumulated SAR for the first RF path, the accumulated SAR for the second RF path, the SAR predicted to be generated for the first RF path, and the SAR predicted to be generated for the second RF path exceeds the threshold SAR, identify that the maximum transmission power limit corresponding to the first RF path is backed off, based on the sum of the accumulated SAR for the first RF path, the accumulated SAR for the second RF path, the SAR predicted to be generated for the first RF path, and the SAR predicted to be generated for the second RF path exceeding the threshold SAR.

9. The electronic device of claim 1, wherein the at least one processor is configured to, as at least part of identifying the maximum transmission power limit corresponding to the first RF path, based on whether the accumulated SAR for the first RF path meets the maximum transmission power limit backoff condition associated with the antenna group determined according to the state of the at least one housing:

identify that a second antenna corresponding to a second RF path for transmitting a second RF signal among the plurality of antennas and the first antenna are included in one antenna group, based on a sum of a first average SAR limit set for the first RF path and a second average SAR limit set for the second RF path;
adjust the first average SAR limit and/or the second average SAR limit so that the first antenna and the second antenna are included in different antenna groups, respectively; and
identify whether to back off the maximum transmission power limit corresponding to the first RF path, based on whether a sum of the accumulated SAR for the first RF path and an SAR predicted to be generated for the first RF path exceeds a threshold SAR, based on the first antenna and the second antenna being included in the different antenna groups according to the adjustment of the first average SAR limit and/or the second average SAR limit.

10. The electronic device of claim 1, wherein the at least one processor is further configured to:

identify a change in the state of the at least one housing; and
reconfigure an antenna group including the first antenna, based on the change in the state of the at least one housing.

11. The electronic device of claim 1, wherein the at least one processor is configured to, as at least part of identifying the maximum transmission power limit corresponding to the first RF path, based on whether the accumulated SAR for the first RF path meets the maximum transmission power limit backoff condition associated with the antenna group determined according to the state of the at least one housing, identify the maximum transmission power limit corresponding to the first RF path, based on whether the accumulated SAR for the first RF path meets a maximum transmission power limit backoff condition determined according to the antenna group and an event indicating a type of a body part contacting the electronic device.

12. An electronic device, comprising:

at least one housing;

a plurality of antennas disposed on the at least one housing;

at least one RF circuit; and

at least one processor, wherein the at least one processor is configured to:

determine to transmit RF signals through a first RF path corresponding to a first antenna among the plurality of antennas and a second RF path corresponding to a second antenna among the plurality of antennas;

identify whether a distance between the first antenna and the second antenna is less than a threshold distance, the distance between the first antenna and the second antenna varying depending on a state of the at least one housing;

based on the distance between the first antenna and the second antenna being less than the threshold distance:

identify whether to reduce at least one of a first maximum transmission power limit corresponding to the first RF path or a maximum transmission power limit corresponding to the second RF path, based on whether a sum of a first accumulated SAR corresponding to the first RF path and a second accumulated SAR corresponding to the second RF path meets a maximum transmission power limit backoff condition; and

control the at least one RF circuit to transmit a first RF signal based on a first transmission power set based on the first maximum transmission power limit and to transmit a second RF signal based on a second transmission power set based on the second maximum transmission power limit.

13. The electronic device of claim 12, wherein the at least one processor is configured to:

based on a distance between the first antenna and the second antenna being a threshold distance or more:

identify whether to reduce the first maximum transmission power limit according to whether the first accumulated SAR corresponding to the first RF path meets the maximum transmission power limit backoff condition;

identify whether to reduce the second maximum transmission power limit according to whether the second accumulated SAR corresponding to the second RF path meets the maximum transmission power limit backoff condition; and

control the at least one RF circuit to transmit a first RF signal based on a first transmission power set based on the first maximum transmission power limit and to transmit a second RF signal based on a second transmission power set based on the second maximum transmission power limit.

14. A method for operating an electronic device including at least one housing, a plurality of antennas disposed on the at least one housing, and at least one RF circuit, the method comprising:

determining to transmit an RF signal through a first RF path corresponding to a first antenna among the plurality of antennas;

identifying a state of the at least one housing;

identifying a maximum transmission power limit corresponding to the first RF path based on whether an accumulated SAR for the first RF path meets a maximum transmission power limit backoff condition associated with an antenna group, wherein the antenna group is determined according to the state of the at least one housing; and

controlling the at least one RF circuit to transmit the RF signal based on transmission power set based on the maximum transmission power limit.

15. A method for operating an electronic device including at least one housing, a plurality of antennas disposed on the at least one housing, and at least one RF circuit, the method comprising:

determining to transmit RF signals through a first RF path corresponding to a first antenna among the plurality of antennas and a second RF path corresponding to a second antenna among the plurality of antennas;

identifying whether a distance between the first antenna and the second antenna is less than a threshold distance, the distance between the first antenna and the second antenna varying depending on a state of the at least one housing;

based on the distance between the first antenna and the second antenna being less than the threshold distance:

identifying whether to reduce at least one of a first maximum transmission power limit corresponding to the first RF path or a maximum transmission power limit corresponding to the second RF path, based on whether a sum of a first accumulated SAR corresponding to the first RF path and a second accumulated SAR corresponding to the second RF path meets a maximum transmission power limit backoff condition; and

controlling the at least one RF circuit to transmit a first RF signal based on a first transmission power set based on the first maximum transmission power limit and to transmit a second RF signal based on a second transmission power set based on the second maximum transmission power limit.

FIG. 1

EP 4 468 612 A1

FIG. 2A

FIG. 2B

START

INVOKE MULTIPLE TABLES FOR
TRANSMISSION SIZE CORRESPONDING
TO MULTIPLE TIMES — 301

IDENTIFY PAST ACCUMULATED
SAR VALUE AND PREDICTED SAR VALUES
AT CURRENT TIME AND FUTURE
TIME FOR MULTIPLE TABLES — 303

305

IS THERE IN
WHICH SUM OF ACCUMULATED
SAR VALUE AND PREDICTED SAR VALUE EXCEED
THRESHOLD ACCUMULATED
VALUE?

NO →

309

TRANSMIT COMMUNICATION
SIGNAL WITH SET
TRANSMISSION POWER

YES

BACK OFF TRANSMISSION POWER OF AT
LEAST PART OF COMMUNICATION SIGNAL — 307

END

FIG. 3A

FIG. 3B

FIG. 4A

EP 4 468 612 A1

FIG. 4B

EP 4 468 612 A1

FIG. 4C

EP 4 468 612 A1

**FIG. 4D**

| | 481 | 482 | 483 | |
|---|---|---|---|---|
| | Past | Current | Future | 480 |
| k+1 th table | D4 | D2 | D5 | → D4+D2+D5 > Th ? |

## FIG. 4E

FIG. 5

## FIG. 6A

611

632

612

613

601

602

623

622

631

621

FIG. 6B

601

602

623

612

613

611

621

622

FIG. 6C

START

DETERMINE TO TRANSMIT RF SIGNAL THROUGH FIRST RF PATH — 701

IDENTIFY STATE OF HOUSING — 703

IDENTIFY MAXIMUM TRANSMISSION POWER LIMIT CORRESPONDING TO FIRST RF PATH BASED ON WHETHER ACCUMULATED SAR FOR FIRST RF PATH MEETS MAXIMUM TRANSMISSION POWER LIMIT BACKOFF CONDITION ASSOCIATED WITH ANTENNA GROUP DETERMINED ACCORDING TO IDENTIFIED STATE OF HOUSING — 705

CONTROL AT LEAST ONE RF CIRCUIT TO TRANSMIT RF SIGNAL BASED ON TRANSMISSION POWER SET BASED ON MAXIMUM TRANSMISSION POWER LIMIT — 707

END

FIG. 7A

FIG. 7B

START

DETERMINE TO TRANSMIT RF SIGNALS THROUGH FIRST RF PATH CORRESPONDING TO FIRST ANTENNA AND SECOND RF PATH CORRESPONDING TO SECOND ANTENNA — 801

DISTANCE BETWEEN FIRST ANTENNA AND SECOND ANTENNA IS LESS THAN THRESHOLD DISTANCE? — 803

NO

YES

IDENTIFY WHETHER TO REDUCE AT LEAST ONE OF FIRST MAXIMUM TRANSMISSION POWER LIMIT CORRESPONDING TO FIRST RF PATH OR MAXIMUM TRANSMISSION POWER LIMIT CORRESPONDING TO SECOND RF PATH BASED ON WHETHER SUM OF FIRST ACCUMULATED SAR CORRESPONDING TO FIRST RF PATH AND SECOND ACCUMULATED SAR CORRESPONDING TO SECOND RF PATH MEETS MAXIMUM TRANSMISSION POWER LIMIT BACKOFF CONDITION — 805

CONTROL AT LEAST ONE RF CIRCUIT TO TRANSMIT FIRST RF SIGNAL BASED ON FIRST TRANSMISSION POWER SET BASED ON FIRST MAXIMUM TRANSMISSION POWER LIMIT AND TRANSMIT SECOND RF SIGNAL BASED ON SECOND TRANSMISSION POWER SET BASED ON SECOND MAXIMUM TRANSMISSION POWER LIMIT — 807

IDENTIFY WHETHER TO REDUCE FIRST MAXIMUM TRANSMISSION POWER LIMIT ACCORDING TO WHETHER FIRST ACCUMULATED SAR CORRESPONDING TO FIRST RF PATH MEETS MAXIMUM TRANSMISSION POWER LIMIT BACKOFF CONDITION — 809

IDENTIFY WHETHER TO REDUCE SECOND MAXIMUM TRANSMISSION POWER LIMIT ACCORDING TO WHETHER SECOND ACCUMULATED SAR CORRESPONDING TO SECOND RF PATH MEETS MAXIMUM TRANSMISSION POWER LIMIT BACKOFF CONDITION — 811

CONTROL AT LEAST ONE RF CIRCUIT TO TRANSMIT FIRST RF SIGNAL BASED ON FIRST TRANSMISSION POWER SET BASED ON FIRST MAXIMUM TRANSMISSION POWER LIMIT AND TRANSMIT SECOND RF SIGNAL BASED ON SECOND TRANSMISSION POWER SET BASED ON SECOND MAXIMUM TRANSMISSION POWER LIMIT — 813

END

FIG. 8

48

START

DETERMINE TO TRANSMIT
RF SIGNAL THROUGH FIRST RF PATH — 901

IDENTIFY STATE OF HOUSING — 903

IDENTIFY SAR EVENT — 905

IDENTIFY MAXIMUM TRANSMISSION POWER LIMIT
CORRESPONDING TO FIRST RF PATH BASED ON
WHETHER ACCUMULATED SAR FOR FIRST RF PATH
MEETS MAXIMUM TRANSMISSION POWER LIMIT — 907
BACKOFF CONDITION CORRESPONDING TO SAR
EVENT AND ANTENNA GROUP DETERMINED
ACCORDING TO IDENTIFIED STATE OF HOUSING

CONTROL AT LEAST ONE RF CIRCUIT TO TRANSMIT
RF SIGNAL BASED ON TRANSMISSION POWER SET — 909
BASED ON MAXIMUM TRANSMISSION POWER LIMIT

END

FIG. 9

921 FIRST ANTENNA GROUP

922 FIRST EVENT

923 SECOND EVENT

931 SECOND ANTENNA GROUP

932 FIRST EVENT

933 SECOND EVENT

FIG. 10

START

IDENTIFY AT LEAST ONE FIRST ANTENNA GROUP
ACCORDING TO FIRST HOUSING STATE — 1101

IDENTIFY CHANGE IN HOUSING STATE — 1103

IDENTIFY AT LEAST ONE SECOND ANTENNA GROUP
ACCORDING TO SECOND HOUSING STATE — 1105

END

# FIG. 11A

START

IDENTIFY AT LEAST ONE FIRST ANTENNA
GROUP AND AT LEAST ONE FIRST EVENT
ACCORDING TO FIRST HOUSING STATE — 1111

IDENTIFY CHANGE IN HOUSING STATE — 1113

IDENTIFY AT LEAST ONE SECOND ANTENNA GROUP
AND AT LEAST ONE SECOND EVENT
ACCORDING TO CHANGED HOUSING STATE — 1115

END

# FIG. 11B

FIG. 12

START

ALLOCATE FIRST ANTENNA TO FIRST ANTENNA GROUP AND SECOND ANTENNA TO SECOND ANTENNA GROUP IN FIRST HOUSING STATE ~1301

ALLOCATE FIRST ANTENNA AND SECOND ANTENNA TO FIRST ANTENNA GROUP BASED ON CHANGE TO SECOND HOUSING STATE ~1303

ALLOCATE FIRST ANTENNA AND SECOND ANTENNA TO SECOND ANTENNA GROUP BASED ON CHANGE TO SECOND HOUSING STATE ~1305

END

FIG. 13A

START

ALLOCATE FIRST ANTENNA TO FIRST ANTENNA
GROUP AND SECOND ANTENNA TO SECOND ANTENNA
GROUP IN FIRST HOUSING STATE ~1311

ALLOCATE FIRST ANTENNA AND SECOND ANTENNA
TO FIRST ANTENNA GROUP BASED ON
CHANGE TO SECOND HOUSING STATE ~1313

ALLOCATE NO ANTENNA TO SECOND ANTENNA GROUP
BASED ON CHANGE TO SECOND HOUSING STATE ~1315

END

# FIG. 13B

START

BACK OFF MAXIMUM TRANSMISSION POWER LIMIT
BASED ON FIRST ACCUMULATED SAR FOR FIRST RF
PATH MEETING MAXIMUM TRANSMISSION POWER LIMIT
BACKOFF CONDITION ASSOCIATED WITH
ANTENNA GROUP DETERMINED ACCORDING TO
IDENTIFIED STATE OF HOUSING ~1401

TRANSMIT RF SIGNAL BASED ON TRANSMISSION POWER
SET BASED ON BACKED-OFF MAXIMUM
TRANSMISSION POWER LIMIT ~1403

IDENTIFY CHANGE IN HOUSING STATE ~1405

IDENTIFY MAXIMUM TRANSMISSION POWER LIMIT BASED ON
SECOND ACCUMULATED SAR FOR FIRST RF PATH
FAILING TO MEET MAXIMUM TRANSMISSION POWER
LIMIT BACKOFF CONDITION ASSOCIATED WITH
ANTENNA GROUP DETERMINED
ACCORDING TO IDENTIFIED STATE OF HOUSING ~1407

TRANSMIT RF SIGNAL BASED ON TRANSMISSION
POWER SET BASED ON IDENTIFIED
MAXIMUM TRANSMISSION POWER LIMIT ~1409

END

FIG. 14

FIG. 15

FIG. 16

START

IDENTIFY TO TRANSMIT MULTIPLE RF
SIGNALS BASED ON MULTIPLE RF PATHS ⟋1701

IDENTIFY FIRST DISTANCE BETWEEN
MULTIPLE ANTENNAS CORRESPONDING ⟋1703
TO MULTIPLE RF PATHS

MULTIPLE
ANTENNAS IDENTIFIED ⟋1705
AS INCLUDED IN SAME ANTENNA
GROUP BASED ON FIRST SAR SUM
AND FIRST DISTANCE?

YES

1709

IDENTIFY SECOND SAR SUM
CORRESPONDING TO FIRST DISTANCE

NO

1707

IDENTIFY WHETHER TO BACK OFF MAXIMUM
TRANSMISSION POWER LIMIT BASED ON
MEETING FIRST CONDITION IN
ANY ONE OF MULTIPLE RF PATHS

1711

IDENTIFY WHETHER TO BACK OFF
MAXIMUM TRANSMISSION POWER LIMIT
BASED ON MEETING SECOND CONDITION
IN ANY ONE OF MULTIPLE RF PATHS

END

FIG. 17

58

FIG. 18A

FIG. 18B

FIG. 19A

FIG. 19B

FIG. 20A

FIG. 20B

FIG. 20C

FIG. 21

| INTERNATIONAL SEARCH REPORT | International application No. |
|---|---|
| | **PCT/KR2023/001026** |

**A.      CLASSIFICATION OF SUBJECT MATTER**

**H04B 1/3827**(2015.01)i; **H04W 52/36**(2009.01)i; **H04W 52/38**(2009.01)i; **H04W 52/28**(2009.01)i; **H04W 52/22**(2009.01)i; **H04W 52/14**(2009.01)i; **H04W 88/06**(2009.01)i

According to International Patent Classification (IPC) or to both national classification and IPC

**B.      FIELDS SEARCHED**

Minimum documentation searched (classification system followed by classification symbols)

H04B 1/3827(2015.01); G01R 29/08(2006.01); H01Q 1/24(2006.01); H04B 17/10(2015.01); H04W 52/22(2009.01); H04W 52/28(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SAR, 거리(distance), 하우징(housing), 파워(power)

**C.      DOCUMENTS CONSIDERED TO BE RELEVANT**

| Category* | Citation of document, with indication, where appropriate, of the relevant passages | Relevant to claim No. |
|---|---|---|
| A | US 7737897 B2 (TAKEUCHI, Akiyoshi et al.) 15 June 2010 (2010-06-15) See column 1, line 14 - column 2, line 10 and column 7, line 45 - column 8, line 19; and claims 1-3. | 1-15 |
| A | KR 10-2021-0020462 A (SAMSUNG ELECTRONICS CO., LTD.) 24 February 2021 (2021-02-24) See paragraphs [0055]-[0058]; and claims 1-20. | 1-15 |
| A | US 10090578 B2 (ANTENNA79, INC.) 02 October 2018 (2018-10-02) See column 7, line 44 - column 8, line 20; and claims 1-22. | 1-15 |
| A | KR 10-2015-0128419 A (ELECTRONICS AND TELECOMMUNICATIONS RESEARCH INSTITUTE) 18 November 2015 (2015-11-18) See paragraphs [0007]-[0026]; and claims 1-20. | 1-15 |
| A | US 2018-0175944 A1 (MAGIC LEAP, INC.) 21 June 2018 (2018-06-21) See paragraphs [0088]-[0099]; and claims 1-50. | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 April 2023** | **25 April 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | International application No.<br>**PCT/KR2023/001026** |
|---|---|---|

| Patent document<br>cited in search report | | | Publication date<br>(day/month/year) | Patent family member(s) | | | Publication date<br>(day/month/year) |
|---|---|---|---|---|---|---|---|
| US | 7737897 | B2 | 15 June 2010 | GB | 0714958 | D0 | 12 September 2007 |
| | | | | GB | 2437870 | A | 07 November 2007 |
| | | | | GB | 2437870 | B | 25 March 2009 |
| | | | | US | 2009-0033562 | A1 | 05 February 2009 |
| | | | | WO | 2006-082860 | A1 | 26 June 2008 |
| KR | 10-2021-0020462 | A | 24 February 2021 | BR | 112022002512 | A2 | 03 May 2022 |
| | | | | CN | 112399535 | A | 23 February 2021 |
| | | | | EP | 3780400 | A1 | 17 February 2021 |
| | | | | US | 11228985 | B2 | 18 January 2022 |
| | | | | US | 2021-0051601 | A1 | 18 February 2021 |
| | | | | US | 2022-0132438 | A1 | 28 April 2022 |
| | | | | US | 2022-0159584 | A1 | 19 May 2022 |
| | | | | WO | 2021-029692 | A1 | 18 February 2021 |
| US | 10090578 | B2 | 02 October 2018 | US | 2017-0047635 | A1 | 16 February 2017 |
| | | | | WO | 2017-030888 | A1 | 23 February 2017 |
| KR | 10-2015-0128419 | A | 18 November 2015 | US | 2015-0323472 | A1 | 12 November 2015 |
| US | 2018-0175944 | A1 | 21 June 2018 | AU | 2017-378496 | A1 | 06 June 2019 |
| | | | | AU | 2017-378496 | B2 | 17 February 2022 |
| | | | | CA | 3045510 | A1 | 21 June 2018 |
| | | | | CN | 110089163 | A | 02 August 2019 |
| | | | | CN | 110089163 | B | 02 December 2022 |
| | | | | EP | 3556025 | A1 | 23 October 2019 |
| | | | | EP | 3556025 | B1 | 12 May 2021 |
| | | | | EP | 3860231 | A1 | 04 August 2021 |
| | | | | IL | 267213 | A | 29 August 2019 |
| | | | | IL | 267213 | B | 31 May 2021 |
| | | | | IL | 282279 | A | 31 May 2021 |
| | | | | IL | 282279 | B | 01 February 2022 |
| | | | | JP | 2020-503750 | A | 30 January 2020 |
| | | | | JP | 2021-114777 | A | 05 August 2021 |
| | | | | JP | 6868695 | B2 | 12 May 2021 |
| | | | | JP | 7008855 | B2 | 25 January 2022 |
| | | | | KR | 10-2019-0092550 | A | 07 August 2019 |
| | | | | KR | 10-2238744 | B1 | 08 April 2021 |
| | | | | KR | 10-2386271 | B1 | 12 April 2022 |
| | | | | KR | 20-2021-0040192 | A | 12 April 2021 |
| | | | | US | 10425171 | B2 | 24 September 2019 |
| | | | | US | 10686538 | B2 | 16 June 2020 |
| | | | | US | 11032013 | B2 | 08 June 2021 |
| | | | | US | 11444701 | B2 | 13 September 2022 |
| | | | | US | 2019-363804 | A1 | 28 November 2019 |
| | | | | US | 2020-412459 | A1 | 31 December 2020 |
| | | | | US | 2021-320729 | A1 | 14 October 2021 |
| | | | | WO | 2018-112430 | A1 | 21 June 2018 |

Form PCT/ISA/210 (patent family annex) (July 2022)